# EUROPÄISCHE PATENTANMELDUNG

(11) **EP 1 610 270 A2**
(43) Veröffentlichungstag der Anmeldung: **28.12.2005**
(21) Anmeldenummer: 05108365.7
(22) Anmeldetag: 26.03.2004
(51) Int. Cl.: G06T 7/00, G07D 7/20, G01N 21/89, H04N 1/60

(54) **Verfahren zur qualitativen Beurteilung eines Materials mit mindestens einem Erkennungsmerkmal**

(30) Priorität: 28.03.2003 DE 10314071
(62) Teilanmeldung aus: 04723616.1
(71) Anmelder: Koenig & Bauer Aktiengesellschaft, 97080 Würzburg (DE)
(72) Erfinder: Diederichs, Carsten, 32657, Lemgo (DE); Lohweg, Volker, 33699, Bielefeld (DE); Sacher, Jörn, 32120, Hiddenhausen (DE); Stöber, Bernd, 33378, Rheda-Wiedenbrück (DE); Türke, Thomas, 33699, Bielefeld (DE); Willeke, Harald, 33102, Paderborn (DE)

(57) **Zusammenfassung**

Die Erfindung betrifft ein Verfahren zur qualitativen Beurteilung eines Materials mit mindestens einem Erkennungsmerkmal, wobei mit einem elektronischen Bildsensor zumindest vom Erkennungsmerkmal ein Farbbild aufgenommen wird, wobei vom Bildsensor mittelbar oder unmittelbar mindestens ein mit dem Farbbild korrelierendes erstes elektrisches Signal bereitgestellt wird, wobei eine mit dem Bildsensor verbundene Auswertevorrichtung das erste elektrische Signal auswertet, wobei aus zumindest einem Referenzbild ein zweites elektrisches Signal gewonnen und in einem Datenspeicher gespeichert wird, wobei das zweite elektrische Signal zumindest für zwei unterschiedliche Eigenschaften des Referenzbildes jeweils einen Sollwert für das erste elektrische Signal aufweist, wobei das erste Signal mit zumindest zwei der im zweiten elektrischen Signal enthaltenen Sollwerte verglichen wird, wobei in dem Vergleich zumindest das Farbbild des Erkennungsmerkmals auf eine Farbabweichung von dem Referenzbild und/oder das Erkennungsmerkmal auf eine Zugehörigkeit zu einer bestimmten Klasse von Erkennungsmerkmalen und/oder auf eine bestimmte geometrische Kontur und/oder auf eine relative Anordnung zu mindestens einem weiteren Erkennungsmerkmal des Materials geprüft wird, wobei die Prüfungen in einem laufenden Druckprozess einer Druckmaschine oder in einem laufenden Arbeitsprozess einer das Material verarbeitenden Maschine erfolgen, wobei zumindest zwei der Prüfungen unabhängig voneinander in parallel verlaufenden Prüfvorgängen erfolgen.

## Beschreibung

Verfahren zur qualitativen Beurteilung eines Materials mit mindestens einem Erkennungsmerkmal

Die Erfindung betrifft ein Verfahren zur qualitativen Beurteilung eines Materials mit mindestens einem Erkennungsmerkmal gemäß dem Oberbegriff des Anspruchs 1.

In der Druckindustrie werden zunehmend Kamerasysteme für unterschiedliche Anwendungen eingesetzt, beispielsweise in Inspektionssystemen, Bahnbeobachtungssystemen oder Registermesssystemen, wobei diese Systeme in oder an einer Druckmaschine oder einer einen Bedruckstoff verarbeitenden Maschine angeordnet sind. Überdies besteht die Forderung, dass diese Systeme ihre Funktion "inline", d. h. im Arbeitsprozess der Druckmaschine oder Bedruckstoff verarbeitenden Maschine integriert ausüben sollen, was aufgrund der vom Kamerasystem gelieferten großen Datenmenge und dem schnellen Prozessablauf der Druckmaschine oder der einen Bedruckstoff verarbeitenden Maschine für das jeweilige Kamerasystem eine erhebliche Herausforderung bedeutet, um beispielsweise in einer Qualitätskontrolle auch für spektralfotometrisch nur schwer zu identifizierende Erkennungsmerkmale trotz der hohen Transportgeschwindigkeit des Materials in der Kürze der zur Beurteilung zur Verfügung stehenden Zeit zu einer zuverlässigen Beurteilung vorzugsweise jedes einzelnen Erkennungsmerkmals zu gelangen. Zur Bildaufnahme finden in derartigen Kamerasystemen vielfach elektronische Bildsensoren Verwendung, insbesondere Farbkameras mit einem aus einem CCD-Chip bestehenden Bildsensor, dessen lichtempfindliche Pixel entsprechend der im Beobachtungsbereich aufgenommenen Farbe ein Ausgangssignal z. B. in drei getrennten Signalkanälen, zumeist für die Farben Rot, Grün und Blau liefern.

Ein Problem der bekannten Kamerasysteme bei der Prüfung von farbigen Material, insbesondere von farbig bedruckten Material besteht darin, dass die von den Farbkameras gelieferten Bilddaten häufig nicht dem Farbempfinden des menschlichen Auges entsprechen. Unbearbeitete Bilddaten dieser Farbkameras sind hinsichtlich Farbbalance, Helligkeit, Kontrast und Farbtonwiedergabe unzureichend im Hinblick auf die Farbabstimmung, die dem menschlichen Farbensehen entspricht. Hauptgrund für dieses Problem ist neben den Unzulänglichkeiten von Objektiven und Beleuchtungseinrichtungen die spektrale Empfindlichkeitsverteilung der eingesetzten Farbkameras. Wenn die Empfindlichkeitsverteilung der eingesetzten Farbkameras nicht mit der Empfindlichkeitsverteilung des menschlichen Auges übereinstimmt, führt das dazu, dass die von den Farbkameras gelieferten Bilddaten bei der nachgeordneten Weiterbearbeitung, beispielsweise der Anzeige an einem Farbmonitor, zu einem verfälschten Seheindruck führen, sodass bei der Prüfung eine angemessene qualitative Beurteilung des bedruckten Materials schon allein aus diesem Grund kaum möglich ist.

Aufgrund vorgelagerter Produktionsprozesse kann es vorkommen, dass die Position eines im Prüfvorgang zu beurteilenden Erkennungsmerkmals innerhalb bestimmter Toleranzgrenzen in einem definierten Erwartungsbereich variiert. Beispielsweise kann die Position eines Fensterfadens, wie er z. B. bei Banknoten oder Wertmarken Verwendung findet, relativ zum Druckbild der Banknoten oder Wertmarken auf einem Druckbogen aufgrund der Eigenschaften des Produktionsprozesses zur Herstellung des Fensterfadens variieren. Bei Inspektionssystemen können derartige im Grundsatz tolerierbare Positionsabweichungen bestimmter Erkennungsmerkmale eine Störmeldung generieren, da beim Vergleich eines als Sollwert definierten Druckmusters mit dem aktuellen Druckbild Bildposition für Bildposition nacheinander verglichen wird, sodass Positionsabweichungen von Erkennungsmerkmalen als Fehler festgestellt werden, die keine sind.

So ist beispielsweise aus der DE 196 13 082 A1 ein Verfahren bekannt, bei dem das bedruckte Material, beispielsweise ein mit Banknoten bedruckter Druckbogen, der mit einem Silberfaden, Hologramm oder Kinegramm versehen ist, mit einer Beleuchtungseinrichtung derart beleuchtet wird, dass das von dem bedruckten Material reflektierte Licht in einen fotoelektrischen Sensor fällt. Das so vom fotoelektrischen Sensor aufgenommene Bild kann anschließend in einer Auswerteeinrichtung, beispielsweise einem Standardrechner mit geeigneter Auswertesoftware ausgewertet und auf Druckfehler geprüft werden. Voraussetzung für die Auswertung ist hier jedoch, dass ein in seiner Position variierendes Erkennungsmerkmal ein ausreichend hohes Reflektionsvermögen aufweist, indem es beispielsweise als glänzender Silberfaden ausgebildet ist. Nachteilig ist demnach, dass Erkennungsmerkmale, deren Bildeigenschaften nach der Aufnahme mittels des fotoelektrischen Sensors nicht ausreichend stark von den Bildeigenschaften des sonstigen Druckbildes abweichen, wie es beispielsweise bei farbigen Fensterfäden der Fall ist, nicht mit ausreichender Zuverlässigkeit von der Auswerteeinrichtung erkannt werden können.

Durch die DE 101 32 589 A1 ist ein Verfahren zur qualitativen Beurteilung von bedrucktem Material mit zumindest einem Erkennungsmerkmal bekannt, bei dem mit einem Bildsensor ein Bild des zu beurteilenden Materials aufgenommen und für dieses Bild in einer Auswerteeinrichtung die geometrische Kontur und/oder die relative Anordnung mehrerer Erkennungsmerkmale untereinander ausgewertet wird.

Durch die nachveröffentlichte DE 102 34 086 A1 ist ein Verfahren zur Signalauswertung eines elektronischen Bildsensors bei der Mustererkennung von Bildinhalten eines Prüfkörpers bekannt, bei dem über die Zugehörigkeit des Prüfkörpers zu einer bestimmten Klasse von Prüfkörpern entschieden wird.

Durch die DE 198 02 781 A1 ist eine Messanordnung zur Identifizierung von wertvollen Objekten durch digitale Bildanalytik bekannt, wobei eine schmalbandige Anregungslichtquelle, z. B. ein abstimmbarer Laser, das Objekt mit Licht eines engen Frequenzbereiches in einem ausgewählten Ortsbereich bestrahlt, wobei vom Objekt reflektiertes Licht oder eine im Objekt durch dessen Bestrahlung induzierte Emission z. B. von einer eine Vielzahl von Pixeln aufweisenden, photometrisch geeichten CCD-Kamera erfasst, digitalisiert und als einen jedes Pixel kennzeichnenden Datensatz einem Computer zugeleitet und in einem Speicher gespeichert wird, wobei das fotografisch erfasste Objekt zusätzlich vermessen werden kann, sodass dem Datensatz eine Information über eine geometrische Anordnung verschiedener Objekte, deren Abstand zueinander oder eine Tiefe von deren Reliefstruktur, hinzugefügt werden kann. Der aus dieser Bilderfassung erstellte Datensatz kann z. B. über das Internet jeweils zu einem Vergleich dieses Datensatzes mit einem von einem anderen Objekt erstellten Datensatz zur Verfügung gestellt werden, um das andere Objekt andernorts auf eine Übereinstimmung mit dem ersten Objekt, d. h. mit dem Original, und damit auf seine Echtheit zu prüfen.

Durch die CH 684 222 A5 ist eine Einrichtung zur Klassifizierung eines Musters, insbesondere von einer Banknote oder von einer Münze, bekannt, wobei ein mehrstufiges lernendes Klassifizierungssystem am Muster sequentiell mindestens drei Prüfungen durch einen Vergleich von Merkmalvektoren mit vektoriellen Sollgrößen durchführt, wobei eine Lichtquelle das Muster anstrahlt und ein Sensor die vom Muster reflektierte Strahlung an diskreten Zeitpunkten misst.

Üblicherweise bestimmen Verfahren zur Mustererkennung Gleichartigkeiten, wie beispielsweise Abstandsmaße für segmentierte Objekte, oder sie berechnen globale Schwellenverteilungen. Diese Verfahren beruhen auf translationsinvarianten Ausgangsspektren. In Realität treten aber oftmals Situationen auf, wie beispielsweise Objektverschiebungen unter dem Aufnahmesystem, verschiedene Untergründe bei der Aufnahme oder Aliasing-Effekte, sodass ein direkter Vergleich dieser Ausgangsspektren mit hinterlegten Sollwerten in vielen Fällen nicht durchgeführt werden kann.

Der Erfindung liegt die Aufgabe zugrunde, ein Verfahren zur qualitativen Beurteilung eines Materials mit mindestens einem Erkennungsmerkmal zu schaffen.

Die Aufgabe wird erfindungsgemäß durch die Merkmale des Anspruchs 1 gelöst.

Die mit der Erfindung erzielbaren Vorteile bestehen insbesondere darin, dass Material, insbesondere bedrucktes Material mit mindestens einem Erkennungsmerkmal auch dann zuverlässig qualitativ beurteilt wird, wenn das vom Material aufgenommene Farbbild, insbesondere das Erkennungsmerkmal über optische Eigenschaften verfügt, die allein mit spektralfotometrischen Verfahren nicht ausreichend zuverlässig zu identifizieren sind. Da das vorgeschlagene Verfahren nicht voraussetzt, dass das qualitativ zu beurteilende Material ein ausgeprägtes Reflexvermögen aufweist, kann praktisch jede beliebige, optisch wahrnehmbare Eigenschaft oder Beschaffenheit des Materials als dessen Erkennungsmerkmal festgelegt werden, wodurch sich für das Verfahren ein deutlich erweiterter Anwendungsbereich ergibt. Über die Festlegung, worin das Erkennungsmerkmal bestehen soll, kann demnach anwendungsbezogen entschieden werden. Die Prüfung ist allein darauf gerichtet, dass zwischen dem Erkennungsmerkmal und seiner Umgebung überhaupt ein optisch wahrnehmbarer Unterschied besteht. Dieser Unterschied wird herangezogen, um das Material qualitativ zu beurteilen, wozu auch gehören kann, es z. B. zu identifizieren oder auf seine Echtheit zu prüfen.

Das vorgeschlagene Verfahren führt insbesondere dann noch zu guten Ergebnissen, wenn außerdem davon auszugehen ist, dass die Position des Erkennungsmerkmals innerhalb eines durch Toleranzgrenzen bestimmten Erwartungsbereiches variiert. Überdies werden die vom Bildsensor erfassten Farben hinsichtlich Farbton, Sättigung und Helligkeit ausreichend genau in einem Farbraum eingeordnet, der dem Farbempfinden des menschlichen Auges entspricht, sodass das Material von einer Anzeigevorrichtung, z. B. einem Farbmonitor in Form eines Farbbildes so farbgetreu wiedergegeben wird, als würde das Material unmittelbar vom menschlichen Auge inspiziert, sodass anhand des Farbbildes eine zuverlässige qualitative Beurteilung des Materials und damit auch insbesondere seines Erkennungsmerkmals möglich ist.

Als Farbraum eignet sich dabei z. B. besonders der sogenannte CIELAB-Farbraum, der in der Drucktechnik weite Verbreitung gefunden hat. Eine wichtige Kenngröße für eine Farbabweichung ist im CIELAB-Farbraum durch den Farbabstand ΔE zwischen den Soll- und Istwerten von den CIELAB-Farbraum charakterisierenden Parametern L, a und b gegeben, wobei der Parameter L für die Helligkeit, a für den Rot-Grün-Wert und b für den Gelb-Blau-Wert steht. Diese Parameter werden auch CIE-Werte genannt. Weitere Kenngrößen sind die Farbtondifferenz ΔH und die Sättigungsdifferenz ΔC, wobei im Mehrfarbendruck insbesondere die Farbtondifferenz ΔH als Kenngröße wichtig ist, weil ein Farbstich subjektiv störender empfunden wird als eine einen Helligkeitsunterschied anzeigende Sättigungsdifferenz ΔC. So bedeutet ein Farbabstand ΔE mit einem Wert z. B. bis 1 einen nicht sichtbaren Farbunterschied, von 2 einen geringen Unterschied, von 3 einen erkennbaren Unterschied, von 4 einen deutlichen Unterschied und ab 5 einen starken Unterschied. Der Wertebereich der CIE-Werte a und b reicht jeweils von -100 für Grün oder Blau bis +100 für Rot oder Gelb, der Wertebereich für die Helligkeit L von 0 (Schwarz; totale Absorption) bis 100 (Weiß; totale Reflexion). Das Wertetripel L=50, a=0, b=0 bezeichnet ein neutrales, mittleres Grau.

Im menschlichen Auge existieren auf der Retina drei Zapfentypen (S; M; L), die in unterschiedlichen Spektralbereichen einfallendes Licht absorbieren. Die maximale Absorption des S-Zapfentyps liegt im blauen Bereich, und zwar bei 420 nm. Der M-Zapfentyp absorbiert maximal im grünen Spektralbereich, und zwar bei 534 nm. Der L-Zapfentyp hat sein Absorptionsmaximum bei 564 nm im gelb/roten Spektralbereich. Man nennt das Sehen mit drei Zapfentypen trichromatisches Sehen. Die einzelnen Farbeindrücke werden durch unterschiedlich starke Reize der einzelnen Zapfentypen ausgelöst. Ein gleich starker Reiz aller Zapfentypen führt zum Eindruck der Farbe Weiß.

Mit dem trichromatischen Sehmodell können jedoch Farbempfindungsphänomene, wie z. B. der Farbantagonismus und die Farbkonstanz nicht erklärt werden. Farbantagonismus bedeutet, dass bestimmte Farben nie in Übergängen gesehen werden können, dass also kein Farbübergang zwischen diesen Farben möglich ist. Farben die den Farbantagonismus zeigen nennt man Gegen- oder Komplementärfarben. Zu nennen sind hier die Farbpaare Rot/Grün und Blau/Gelb sowie Schwarz/Weiß. Bei der Farbkonstanz wird die unterschiedliche spektrale Verteilung des Lichts ausgeglichen, die beispielsweise abhängig von Wetter oder Tageslichtverhältnissen ist.

1920 entwickelte Hering die Gegenfarbentheorie, um diese Farbempfindungsphänomene abweichend vom klassischen trichromatischen Farbmodell zu erklären. Das Gegenfarbmodell geht davon aus, dass die Zapfen in rezeptiven Feldern, nämlich in Blau/Gelb-Feldern und Rot/Grün-Feldern angeordnet sind. Unter rezeptiven Feldern sind hier Neuronen zu verstehen sowie die Art und Weise, wie die Reize der Zapfen durch die Neuronen weiter verarbeitet werden. Für das Farbensehen sind im Wesentlichen zwei Arten von rezeptiven Feldern verantwortlich. Das erste rezeptive Feld bezieht seinen Input aus den L- und M-Zapfen, das zweite rezeptive Feld aus den S-Zapfen zusammen mit unterschiedlich gewichteten Reizen der L- und M-Zapfen. Man geht davon aus, dass in der Ebene der Neuronen oder rezeptiven Felder eine subtraktive Farbmischung zur Reizung der Zapfen vorgenommen wird.

Das in der Technik meist verwendete trichromatische Modell zur Beschreibung von additiven Farbbildern ist das RGB-Modell. Im RGB-Modell wird der Farbraum durch die drei Grundfarben Rot, Grün und Blau beschrieben. Nachteilig an diesem Modell ist insbesondere, dass die durch das RGB-Modell vorgenommene Beschreibung nicht dem Empfinden des menschlichen Auges entspricht, da insbesondere das Verhalten der menschlichen Perzeption, also die Wahrnehmung durch die Sinnesorgane keine Berücksichtigung findet.

Elektronische Bildsensoren, insbesondere CCD-Chips für Farbkameras weisen i. d. R. eine Vielzahl von z. B. matrixförmig angeordneten lichtempfindlichen Pixel auf, z. B. eine Millionen oder mehr, von denen i. d. R. ein jedes entsprechend des im Beobachtungsbereich aufgenommenen farbigen Lichts ein mit dem Farbbild korrelierendes erstes elektrisches Signal liefert, das z. B. auf drei voneinander getrennte Signalkanäle aufgeteilt wird, wobei jeder Signalkanal zum Betrachtungszeitpunkt zumeist einen den Grundfarben Rot, Grün und Blau entsprechenden Teil des ersten elektrischen Signals bereitstellt. Man bezeichnet ein solches Signal als ein RGB-Signal. Vorzugsweise wird eine spektrale Empfindlichkeit jedes Signalkanals (R; G; B) auf die spektrale Empfindlichkeit des menschlichen Auges eingestellt, so z. B. R = Rot auf 564 nm, G = Grün auf 534 nm und B = Blau auf 420 nm. Auch wird das erste elektrische Signal in seiner Gesamtheit hinsichtlich Farbton, Sättigung und Helligkeit an das Farbempfinden des menschlichen Auges angepasst. Ein mit einer derartigen Farbkamera aufgenommenes Farbbild setzt sich folglich aus einer Vielzahl von Bildpunkten zusammen.

Das erfindungsgemäße Verfahren zeichnet sich nun dadurch aus, dass aus zumindest einem Referenzbild ein zweites elektrisches Signal gewonnen und in einem Datenspeicher gespeichert wird, wobei das zweite elektrische Signal zumindest einen Sollwert für das erste elektrische Signal bildet, dass zumindest das Farbbild des Erkennungsmerkmals auf eine Farbabweichung von dem Referenzbild und/oder das Erkennungsmerkmal auf eine Zugehörigkeit zu einer bestimmten Klasse von Erkennungsmerkmalen und/oder auf eine bestimmte geometrische Kontur und/oder auf eine relative Anordnung zu mindestens einem weiteren Erkennungsmerkmal des Materials jeweils durch einen Vergleich des ersten Signals mit dem zweiten Signal auf ein Erreichen des Sollwerts oder eine Übereinstimmung mit demselben geprüft wird. Zur Erhöhung der Prüfsicherheit wird das Material und/oder sein Erkennungsmerkmal vorzugsweise gleichzeitig stets hinsichtlich mindestens zwei der zuvor genannten Kriterien geprüft. Dazu erfolgen zumindest zwei der Prüfungen des Farbbildes, insbesondere die Prüfung des Erkennungsmerkmals auf eine Farbabweichung von einem Referenzbild und die Prüfung des Erkennungsmerkmals auf seine Zugehörigkeit zu einer bestimmten Klasse von Erkennungsmerkmalen oder auf eine bestimmte geometrische Kontur oder auf eine relative Anordnung zu weiteren Erkennungsmerkmalen des Materials vorzugsweise zeitgleich in parallel und unabhängig voneinander verlaufenden Prüfvorgängen. Mit dem vorgeschlagenen Verfahren ist aufgrund der sich ergebenden Prüfsicherheit und aufgrund der Prüfgeschwindigkeit, mit der die Durchführung des Verfahrens erfolgt, auch eine Beurteilung von bedrucktem Material in einem laufenden Druckprozess einer Druckmaschine oder in einem laufenden Arbeitsprozess einer das bedruckte Material weiter verarbeitenden Maschine zur Qualitätskontrolle dieses Materials möglich. Beim Material handelt es sich insbesondere um hochwertige Druckerzeugnisse, die z. B. aus Sicherheitsgründen eine sehr sorgfältige Prüfung erfordern und an die z. B. hinsichtlich der Stabilität ihrer drucktechnischen Beschaffenheit hohe Anforderungen gestellt werden, insbesondere also um Banknoten oder Wertmarken.

Die Prüfung des Farbbildes auf eine Farbabweichung von dem Referenzbild erfolgt vorzugsweise dadurch, dass der im ersten Signalkanal bereitgestellte Teil des zu dem Farbbild gehörenden ersten Signals mit dem im zweiten Signalkanal bereitgestellten Teil mittels einer ersten Berechnungsvorschrift verknüpft wird, wodurch ein Ausgangssignal eines ersten Gegenfarbkanals generiert wird, dass der im dritten Signalkanal bereitgestellte Teil des zu dem Farbbild gehörenden ersten Signals mit dem Teil in dem ersten und dem zweiten Signalkanal mittels einer zweiten Berechnungsvorschrift verknüpft wird, wodurch ein Ausgangssignal eines zweiten Gegenfarbkanals generiert wird, und dass die Ausgangssignale der Gegenfarbkanäle durch einen Vergleich mit Sollwerten klassifiziert werden.

Die Prüfung des Erkennungsmerkmals auf seine Zugehörigkeit zu einer bestimmten Klasse von Erkennungsmerkmalen erfolgt vorzugsweise dadurch, dass das vom Bildsensor bereitgestellte erste elektrische Signal mittels zumindest einer Rechenvorschrift in ein translationsinvariantes Signal mit zumindest einem Merkmalswert umgewandelt wird, dass der Merkmalswert mit zumindest einer unscharfen Zugehörigkeitsfunktion gewichtet wird, dass eine übergeordnete unscharfe Zugehörigkeitsfunktion durch Verknüpfung aller Zugehörigkeitsfunktionen mittels einer aus zumindest einer Regel bestehenden Berechnungsvorschrift generiert wird, dass ein Sympathiewert aus der übergeordneten unscharfen Zugehörigkeitsfunktion ermittelt wird, dass der Sympathiewert mit einem Schwellwert verglichen wird und dass in Abhängigkeit vom Ergebnis dieses Vergleichs über eine Zugehörigkeit des Erkennungsmerkmals zu einer bestimmten Klasse von Erkennungsmerkmalen entschieden wird.

Die Prüfung des Erkennungsmerkmals auf eine bestimmte geometrische Kontur und/oder auf eine relative Anordnung zu mindestens einem weiteren Erkennungsmerkmal des Materials erfolgt vorzugsweise dadurch, dass zumindest ein Untergrundsollwert und zumindest ein Maskensollwert in dem Datenspeicher hinterlegt werden, wobei der Untergrundsollwert zumindest eine Eigenschaft des zu beurteilenden Materials in zumindest einem Teil eines das Erkennungsmerkmal umgebenden Umgebungsbereichs repräsentiert und wobei der Maskensollwert die geometrische Kontur des Erkennungsmerkmals oder die relative Anordnung mehrerer Erkennungsmerkmale untereinander repräsentiert, dass bei der Prüfung des Materials aus dem vom Bildsensor bereitgestellten ersten elektrischen Signal und dem Untergrundsollwert ein Differenzwert zumindest für den Erwartungsbereich gebildet wird, dass aus einem Vergleich des Differenzwertes mit dem Maskensollwert die aktuelle Position des Erkennungsmerkmals abgeleitet wird und dass zur qualitativen Beurteilung des Materials der Bereich des zu beurteilenden Materials, der sich aus der aktuellen Position des Erkennungsmerkmals ergibt, ausgeblendet wird.

Die Anpassung des ersten elektrischen Signals an das Farbempfinden des menschlichen Auges erfolgt dadurch, dass das vom Bildsensor zu jedem Betrachtungszeitpunkt bereitgestellte RGB-Signal als ein vektorielles Ausgangssignal aufgefasst wird, wobei die Koeffizienten des RGB-Signal-Vektors mit einer insbesondere quadratischen Korrekturmatrix multipliziert werden, sodass alle einen Signalkanal repräsentierenden Teile des ersten elektrischen Signals dem Farbempfinden des menschlichen Auges angenähert werden. Durch die Multiplikation des RGB-Signal-Vektors mit einer Korrekturmatrix gelingt zum einen eine relativ genaue Einordnung aller Druckfarben in einen grundsätzlich beliebigen Farbraum. Außerdem ist eine Anpassung des RGB-Signal-Vektors mittels der Multiplikation mit der Korrekturmatrix datentechnisch einfach zu realisieren, sodass auch bei großen Mengen von RGB-Signalen, die von einer Vielzahl von Pixel des Bildsensors gleichzeitig bereitgestellt werden, eine Implementierung in ein reales System möglich ist.

Von entscheidender Bedeutung für die Qualität der vorgeschlagenen Korrektur der RGB-Signale sind selbstverständlich die Koeffizienten der Korrekturmatrix, da je nach Wahl dieser Koeffizienten die RGB-Signal-Vektoren in unterschiedlicher Weise transformiert werden. Die Koeffizienten der Korrekturmatrix können beispielsweise aus Erfahrungswerten bestehen. Sie werden in einem Datenspeicher gespeichert.

Um die Koeffizienten der Korrekturmatrix variabel an unterschiedliche Randbedingungen, beispielsweise hinsichtlich der verwendeten Farbkamera, der Beleuchtungsverhältnisse oder der verwendeten Optiken anzupassen, wird ein iterativer Näherungsalgorithmus vorgeschlagen. Zur Durchführung dieses Näherungsalgorithmus wird eine Referenzfarbtafel, beispielsweise ein IT8-Chart mit 288 Farbfeldern vorgegeben. In den Farbfeldern sind die unterschiedlichen Referenzfarben dargestellt. Außerdem ist die Einordnung der verschiedenen Referenzfarben in einem geeigneten Farbraum, beispielsweise dem CIELAB-Farbraum bekannt. Durch bekannte Transformationen lassen sich aus diesen vorgegebenen CIELAB-Werten für die verschiedenen Referenzfarben der Referenzfarbtafel entsprechende Sollwerte für die drei Signalkanäle berechnen. Im Ergebnis wird also für den Näherungsalgorithmus eine Referenzfarbtafel als Eingangsgröße und für jede Referenzfarbe ein Vektor mit einem Sollwert für jeden Signalkanal als gewünschtes Ergebnis der Umrechnung vorgegeben. Bei der Durchführung des Näherungsalgorithmus zur Bestimmung der Koeffizienten der Korrektormatrix wird die Referenzfarbtafel mit dem Bildsensor der Farbkamera aufgenommen und für jedes Farbfeld der RGB-Signal-Vektor ermittelt. Die Differenz zwischen diesen RGB-Signal-Vektoren der Farbkamera und dem Vektor mit den vorgegebenen Sollwerten entspricht der Differenz zwischen dem Farbempfinden des menschlichen Auges und der Empfindlichkeitsverteilung der Farbkamera.

Um die Beleuchtungsquelle bei Einsatz entsprechender Kamerasysteme nicht auf eine Normlichtquelle kalibrieren zu müssen, kann ein weiterer Korrekturschritt durchgeführt werden. In diesem Korrekturschritt werden die Koeffizienten der RGB-Signal-Vektoren derart umgerechnet, dass das Ergebnis denjenigen RGB-Signal-Vektoren entspricht, die bei Ausleuchtung des Beobachtungsbereichs mit einem Normlicht erhalten würden. Die Farbkorrekturwerte zur Anpassung der RGB-Signal-Vektoren an verschiedene Beleuchtungsquellen und Änderungen derselben können vorteilhaft wie folgt berechnet werden.

In der Drucktechnik wird z. Zt. noch das Normlicht D50 verwendet. Durch Vorgabe des Weißpunktes D50 ist es möglich, die Rec. 709 durch eine Umrechnung auf das D50-Normlicht anzupassen, sodass sich die nichtlinearen RGB-Signal-Vektoren verhalten, als ob das zu untersuchende Objekt mit einer D50-Beleuchtung angestrahlt worden sei. Durch das vorgeschlagene Verfahren ist es möglich, die RGB-Signal-Vektoren iterativ an den CIELAB-Farbraum anzupassen, ohne dass eine reale Normbeleuchtung notwendig ist. Dieses Verfahren hat den Vorteil, dass bei einer zu erwartenden Änderung der Normlichtvorgabe sofort eine Anpassung vorgenommen werden kann.

Ausgangspunkt der Iteration ist eine Korrekturmatrix, deren Koeffizienten als Ausgangswerte vorgegeben sind. Diese Ausgangswerte können entweder rein zufällig oder entsprechend bestimmter Erfahrungswerte gewählt sein. Im ersten Iterationsschritt wird nun diese Korrekturmatrix mit allen vom Bildsensor bereitgestellten RGB-Signal-Vektoren multipliziert und die dadurch erhaltenen korrigierten RGB-Signal-Vektoren in einem Datenspeicher zwischengespeichert. Anschließend werden die Koeffizienten der Korrekturmatrix leicht verändert und die Multiplikation erneut durchgeführt. Die Änderung der Koeffizienten der Korrekturmatrix wird dabei jeweils nur dann angenommen, wenn sich die korrigierten RGB-Signal-Vektoren an die Vektoren mit den vorgegebenen Sollwerten annähern.

Die Annäherung der korrigierten RGB-Signal-Vektoren an die Vektoren mit den vorgegebenen Sollwerten wird für jeden Iterationsschritt bewertet, um anhand dieser Bewertung entscheiden zu können, ob die in diesem Iterationsschritt vorgenommene Änderung der Koeffizienten der Korrekturmatrix übernommen oder verworfen werden soll. Ein vorteilhaftes Bewertungsverfahren sieht vor, dass für jedes Farbfeld der Referenzfarbtafel der Differenzwert zwischen dem korrigierten RGB-Signal-Vektor und dem Vektor mit den vorgegebenen Sollwerten für dieses Farbfeld ermittelt und die Summe aller dieser Differenzwerte aufaddiert wird. Die Änderung der Korrekturkoeffizienten der Korrekturmatrix im aktuellen Iterationsschritt wird nur dann übernommen, wenn die Summe aller Differenzwerte in diesem aktuellen Iterationsschritt im Vergleich zur Summe aller Differenzwerte im vorangegangenen Iterationsschritt kleiner geworden ist. Ist dagegen die Summe aller Differenzwerte durch die Änderung der Koeffizienten der Korrekturmatrix im vorangegangenen Iterationsschritt größer geworden, wird die Änderung der Koeffizienten verworfen. Durch diese summarische Betrachtung der Differenzwerte über alle Referenzfarben ist es durchaus möglich, dass sich die Differenz für einzelne Referenzfarben während eines Iterationsschrittes vergrößert. Insgesamt wird jedoch zuverlässig die Minimierung der Differenzwerte über alle Signalkanäle hinweg sichergestellt.

Ein weiteres Problem bei Kamerasystemen ist die richtige Einstellung der Farbbalance, d. h. die richtige Gewichtung der verschiedenen Signalkanäle zueinander. Um die Farbbalance der einzelnen Signalkanäle relativ zueinander einzustellen, können die Koeffizienten jedes RGB-Signal-Vektors jeweils mit einem signalkanalabhängigen Korrketurfaktor multipliziert werden. Zugleich wird zu jedem RGB-Signal-Vektor ein Korrekturvektor hinzuaddiert. Diese Korrektur der drei Signalkanäle jedes RGB-Signal-Vektors entspricht einer linearen Verschiebung der einzelnen Koeffizienten der RGB-Signal-Vektoren.

Eine besonders gute Farbbalance wird erreicht, wenn der Korrekturvektor und die signalkanalabhängigen Korrekturfaktoren derart gewählt werden, dass die durch Anwendung der Korrektur mit dem Korrekturvektor und den Korrekturfaktoren erhaltenen korrigierten RGB-Signal-Vektoren für die beiden Felder mit den Referenzgrauwerten Schwarz und Weiß im Wesentlichen exakt den für diese beiden Farbfelder Vektoren mit den vorgegebenen Sollwerten entsprechen. D. h. mit anderen Worten, die lineare Verschiebung der RGB-Signal-Vektoren wird so gewählt, dass sich für die beiden Referenzgrauwerte Schwarz und Weiß korrigierte Ergebnisse ergeben, die dem Kontrastempfinden des menschlichen Auges entsprechen. Diese lineare Verschiebung wird vorzugsweise auf alle RGB-Signal-Vektoren angewendet, wodurch Helligkeit und Kontrast im gesamten Farbspektrum automatisch mitkorrigiert werden.

Bei der Verwendung von Farbkameras kann es zu Farbverfälschungen und einem Abfall der Intensität insbesondere an den Rändern der Kamerabilder kommen. Diese Verfälschungen werden von den verwendeten Optiken, z. B. den verwendeten Linsen erzeugt. Zur Korrektur dieses Intensitätsabfalls kann eine sogenannte Shading-Korrektur eingesetzt werden. Dazu werden für jeden Pixel des Bildsensors signalkanalabhängige Korrekturfaktoren vorgegeben. Durch Multiplikation dieser pixelabhängigen Korrekturfaktoren mit den Koeffizienten der RGB-Signal-Vektoren können die pixelspezifischen Farbverfälschungen oder ein bauartbedingter Intensitätsabfall in den unterschiedlichen Bereichen des Bildsensors ausgeglichen werden.

Diese pixelspezifischen, signalkanalabhängigen Korrekturfaktoren können beispielsweise in einfacher Weise experimentell dadurch ermittelt werden, dass der Beobachtungsbereich der Farbkamera mit einem homogenen Material, insbesondere mit einem homogen weißem Material ausgelegt und mit der Kamera für jeden Pixel ein RGB-Signal-Vektor ermittelt wird. Aus all diesen RGB-Signal-Vektoren wird dann derjenige RGB-Signal-Vektor herausgefiltert, der die werthöchsten Koeffizienten aufweist und somit die hellste Stelle im Beobachtungsbereich repräsentiert. Da der Beobachtungsbereich aber mit einem homogen farbigen Material ausgelegt ist, müssten alle Pixel im Wesentlichen identisch miteinander übereinstimmende RGB-Signal-Vektoren liefern. Die jeweiligen Differenzen beruhen also auf Farbverfälschungen oder einem bauartbedingten Intensitätsabfall. Um dies auszugleichen, werden nun für jeden Signalkanal jedes einzelnen Pixel Korrekturfaktoren gewählt, die dafür sorgen, dass bei Aufnahme des homogen farbigen Materials alle RGB-Signal-Vektoren dem RGB-Signal-Vektor an der hellsten Stelle im Beobachtungsbereich entsprechen.

Insbesondere Farbverfälschungen hängen stark von den Beleuchtungsverhältnissen im Beobachtungsbereich ab. Um Fehlerquellen durch einen Wechsel der Beleuchtungsverhältnisse auszuschließen, sollte deshalb die Beleuchtung bei der experimentellen Bestimmung der pixelspezifischen, signalkanalabhängigen Korrekturfaktoren der Beleuchtung während des späteren Einsatzes des Kamerasystems entsprechen.

Bei vielen Anwendungsfällen des Verfahrens zur Anpassung des ersten elektrischen Signals an das Farbempfinden des menschlichen Auges werden die korrigierten RGB-Signal-Vektoren, die durch Korrektur der ursprünglich von der Farbkamera bereitgestellten RGB-Signal-Vektoren erhalten werden, zur Ansteuerung der getrennten Signalkanäle eines Farbmonitors eingesetzt. Die Darstellung der Farben an einem Farbmonitor wirft dabei ebenfalls das Problem auf, dass die Darstellungscharakteristik der meisten Farbmonitore nicht dem Farbempfinden des menschlichen Auges entspricht. Dies beruht insbesondere darauf, dass das Helligkeitsverhalten der Farbmonitore in der Regel nicht linear ist, d. h. die Intensität des Lichts, das am Farbmonitor reproduziert wird, ist eine nichtlineare Funktion der am Farbmonitor anstehenden elektrischen Eingangssignale, hier der RGB-Signal-Vektoren. Dies bedeutet mit anderen Worten, dass für den Fall, dass die entsprechend dem Farbempfinden des menschlichen Auges korrigierten RGB-Signal-Vektoren einfach an den Farbmonitor übertragen und dort ohne Berücksichtigung der Nichtlinearität seines Helligkeitsverhaltens angezeigt werden, am Farbmonitor unerwünschte Verfälschungen im Farbbild auftreten. Eine verlässliche qualitative Beurteilung eines am Farbmonitor dargestellten Materials, insbesondere eines Materials mit einem Erkennungsmerkmal ist dann objektiv nicht möglich.

Um derartige Farbverfälschungen bei der Darstellung an einem Farbmonitor zu verhindern, können die als Basis genommenen Koeffizienten des korrigierten RGB-Signal-Vektors jeweils mit einem Faktor γ potenziert werden. Durch diese nichtlineare Umrechnung der Koeffizienten der korrigierten RGB-Signal-Vektoren kann die Nichtlinearität des Helligkeitsverhaltens der meisten Farbmonitore ausgeglichen werden. Für die meisten Farbmonitore muss für den Faktor γ ein Wert im Bereich zwischen 0,3 und 0,5, insbesondere ungefähr zu 0,45 gewählt werden.

Beim Verfahren zur Prüfung des Farbbildes auf eine Farbabweichung von dem Referenzbild wird die Verarbeitung der Reize beim menschlichen Farbensehen simuliert. Um die drei Zapfentypen des menschlichen Auges mit ihrer unterschiedlichen spektralen Empfindlichkeit nachzubilden, wird - wie bereits erwähnt - für das vom Bildsensor aufgenommene Farbbild von jedem Pixel ein Signal-Vektor bereitgestellt, dessen Koeffizienten vorzugsweise drei voneinander getrennte Signalkanäle repräsentieren. Jeder der drei Signalkanäle besitzt eine charakteristische spektrale Empfindlichkeit. Die beiden rezeptiven Felder, welche die zweite Stufe der Farbverarbeitung beim menschlichen Sehen darstellen, werden durch eine entsprechende Verknüpfung der drei voneinander getrennten Signalkanäle simuliert. Das Rot/Grün-Feld der menschlichen Farbwahrnehmung stellt im technischen Modell den ersten Gegenfarbkanal dar. Das Ausgangssignal des ersten Gegenfarbkanals wird durch Verknüpfung des Teils des Signal-Vektors im ersten Signalkanal mit dem Teil des Signal-Vektors im zweiten Signalkanal generiert. Die Verknüpfung geschieht mittels einer Berechnungsvorschrift, welche aus zumindest einer Rechenregel besteht. Das Blau/Gelb-Feld wird im technischen Modell durch Verknüpfung des Teils des Signal-Vektors im dritten Signalkanal mit einer Kombination aus den Teilen des ersten und des zweiten Signalkanals erzeugt. Das Blau/Gelb-Feld entspricht im technischen Modell dem zweiten Gegenfarbkanal. Das Ausgangssignal des zweiten Gegenfarbkanals wird durch die vorgehend beschriebene Verknüpfung generiert. Die Verknüpfung geschieht mittels einer zweiten Berechnungsvorschrift, welche aus zumindest einer Rechenregel besteht. Um den Signal-Vektor des untersuchten Pixel zu bewerten, findet im nächsten Schritt eine Klassifikation der Ausgangssignale der beiden Gegenfarbkanäle statt. Dadurch wird entschieden, ob der Signal-Vektor des untersuchten Pixel und damit letztlich auch das Farbbild einer bestimmten Klasse entspricht, wodurch eine gut/schlecht Klassifikation getroffen werden kann.

In welchem spektralen Bereich die Signalkanäle des Verfahrens arbeiten, ist für das Prinzip des Verfahrens ohne wesentlichen Belang, solange es sich um Signalkanäle mit unterschiedlicher spektraler Empfindlichkeit handelt. Es ist vorteilhaft, wenn die Signalkanäle den drei Grundfarben des RGB-Modells, nämlich Rot, Grün und Blau entsprechen, weil damit auf ein weit verbreitetes Farbmodell zurückgegriffen wird. Vorteilhafterweise wird jeder Signalkanal in seiner spektralen Empfindlichkeit an die spektrale Empfindlichkeit der Zapfentypen der Retina des menschlichen Auges angepasst.

In welcher Art und Weise die beiden Ausgangssignale der Gegenfarbkanäle generiert werden, ist für das Prinzip der Erfindung von untergeordneter Bedeutung. Eine Möglichkeit besteht darin, dass eine Rechenregel der ersten Berechnungsvorschrift eine gewichtete Differenzbildung des Teils des Signal-Vektors im zweiten Signalkanal vom Teil des Signal-Vektors im ersten Signalkanal und / oder eine Rechenregel der zweiten Berechnungsvorschrift eine gewichtete Differenzbildung der gewichteten Summe der Teile des ersten und zweiten Signalkanals vom Teil des dritten Signalkanals vorsieht.

Vorzugsweise wird zumindest ein Signal in zumindest einem Gegenfarbkanal nach und /oder vor der Verknüpfung einer Transformationsvorschrift unterzogen, insbesondere einer nichtlinearen Transformationsvorschrift. Eine Transformation hat insbesondere den Vorteil, dass der digitale Charakter von elektronisch erzeugten Farbbildern Berücksichtigung finden kann. Ebenfalls ist es durch Transformationsvorschriften möglich, ein Signal aus dem Farbraum in einen Raum zu transformieren, in welchem die Reizung der Zapfen beschrieben werden kann. Vorzugsweise werden die Signale in beiden Gegenfarbkanälen einer Transformation unterzogen.

Da die rezeptiven Felder beim menschlichen Sehen durch ein Tiefpassverhalten charakterisiert sind, ist es sinnvoll, wenn zumindest ein Signal in zumindest einem Gegenfarbkanal mittels eines Tiefpassfilters gefiltert wird. Vorzugsweise wird das Ausgangssignal jedes Gegenfarbkanals mittels eines Tiefpassfilters gefiltert.

Das Verfahren weist vorzugsweise einen Lernmodus und einen Arbeitsmodus auf. Insbesondere ist eine die Signale des Bildsensors verarbeitende Auswertevorrichtung zwischen diesen beiden Betriebsarten, d. h. dem Lernmodus und dem Arbeitsmodus, umschaltbar. Während des Lernmodus wird zumindest ein Referenzbild, z. B. die Aufnahme zumindest von einem einzelnen Druckbogen, pixelweise geprüft und die durch das Referenzbild erzeugten Ausgangssignale der beiden Gegenfarbkanäle als ein einen Sollwert bildendes zweites elektrisches Signal in einem Datenspeicher gespeichert. Konkret bedeutet das, dass ein Signal-Vektor des Referenzbildes in z. B. drei Signalkanälen bereitgestellt wird, dass die in jedem Signalkanal bereitgestellten Teile des Signal-Vektors empfindungsgemäß angepasst werden und dass diese Teile anschließend entsprechend dem Gegenfarbmodell miteinander verknüpft werden. Die Ausgangssignale jedes Gegenfarbkanals werden dann pixelweise im Datenspeicher gespeichert. Im nachfolgenden Arbeitsmodus werden dann die durch ein zu prüfendes Farbbild erzeugten Ausgangssignale des entsprechenden Pixel mit den entsprechenden im Datenspeicher jeweils als Sollwert gespeicherten Werten verglichen und sodann wird eine Klassifikationsentscheidung getroffen.

Um zulässige Farbschwankungen des Farbbildes wie auch Schwankungen der Bedingungen bei der Bildaufnahme zu berücksichtigen, ist es sinnvoll, wenn die im Datenspeicher gespeicherten Werte durch mehrere Referenzdatensätze gebildet werden, sodass für jeden Wert im Datenspeicher ein zulässiges Toleranzfenster festgelegt wird, innerhalb dessen ein bei der Bildprüfung erzeugter Ausgangssignalwert eines Gegenfarbkanals schwanken darf. Der Sollwert des Ausgangssignals eines Gegenfarbkanals kann hierbei beispielsweise durch arithmetische Mittelwertbildung der Einzelwerte ermittelt werden, wobei sich die Einzelwerte aus den Referenzdatensätzen ergeben. Das Toleranzfenster kann beispielsweise durch die Minimal- und Maximalwerte oder durch die Standardabweichung der durch die untersuchten Referenzbilder erzeugten Ausgangssignale der Gegenfarbkanäle jedes Pixel festgelegt werden.

Das Verfahren zur Prüfung des Erkennungsmerkmals auf seine Zugehörigkeit zu einer bestimmten Klasse von Erkennungsmerkmalen verläuft vorzugsweise in folgenden wesentlichen Verfahrensschritten: Merkmalsbildung, Fuzzyfizierung, Interferenz, Defuzzyfizierung und Entscheidung über eine Klassenzugehörigkeit.

Bei der Merkmalsbildung wird das vom Bildsensor bereitgestellte erste elektrische Signal mittels zumindest einer Rechenvorschrift in ein translationsinvariantes Signal in einem Merkmalsraum überführt. Ziel der Merkmalsbildung ist es, solche Größen zu bestimmen, durch welche typische Signaleigenschaften des Farbbildes charakterisiert werden. Die typischen Signaleigenschaften des Farbbildes werden durch sogenannte Merkmale repräsentiert. Die Merkmale können hierbei durch Werte im Merkmalsraum oder durch linguistische Variablen repräsentiert werden. Durch Überführung des ersten elektrischen Signals in den Merkmalsraum entsteht ein Signal, welches aus einem Merkmalswert oder aus mehreren Merkmalswerten besteht.

Die Zugehörigkeit eines Merkmalswerts zu einem Merkmal wird durch zumindest eine unscharfe Zugehörigkeitsfunktion beschrieben. Hierbei handelt es sich um eine weiche oder auch unscharfe Zuordnung, wobei abhängig vom Wert des Merkmalswerts die Zugehörigkeit des Merkmalswerts zum Merkmal in einem normierten Intervall zwischen 0 und 1 vorliegt. Das Konzept der Zugehörigkeitsfunktion führt dazu, dass ein Merkmalswert nicht mehr entweder ganz oder gar nicht einem Merkmal zuordenbar ist, sondern vielmehr eine Fuzzyzugehörigkeit annehmen kann, welche zwischen den Bool'schen Wahrheitswerten 1 und 0 liegt. Den eben beschriebenen Schritt nennt man Fuzzyfizierung. Bei der Fuzzyfizierung findet also im Wesentlichen eine Umwandlung eines scharfen Merkmalswerts in eine oder mehrere unscharfe Zugehörigkeiten statt.

Bei der Interferenz wird mittels einer Berechnungsvorschrift, welche zumindest aus einer Regel besteht, eine übergeordnete Zugehörigkeitsfunktion generiert, wobei alle Zugehörigkeitsfunktionen miteinander verknüpft werden. Im Ergebnis erhält man somit für jedes Fenster eine übergeordnete Zugehörigkeitsfunktion.

Bei der Defuzzyfizierung wird aus der in der Interferenz gebildeten übergeordneten Zugehörigkeitsfunktion ein Zahlenwert ermittelt, der auch Sympathiewert genannt wird. Bei der Entscheidung über die Klassenzugehörigkeit findet ein Vergleich des Sympathiewertes mit einem vorher festgelegten Schwellwert statt, anhand dessen die Zugehörigkeit des Fensters zu einer bestimmten Klasse entschieden wird. In diesem Fall bildet der Schwellwert einen weiteren, im zweiten elektrischen Signal enthaltenen Sollwert.

Welcher Art die Merkmalswerte im Merkmalsraum sind, ist für den prinzipiellen Ablauf des Verfahrens von untergeordneter Bedeutung. So können beispielsweise bei Zeitsignalen deren Mittelwert oder Varianz als Merkmalswerte bestimmt werden. Wird an das Verfahren zur Prüfung des Erkennungsmerkmals auf seine Zugehörigkeit zu einer bestimmten Klasse von Erkennungsmerkmalen die Anforderung gestellt, dass es die Farbbilder unabhängig von der jeweils vorherrschenden Signalintensität fehlerfrei bearbeiten soll und sollen des Weiteren kleine, aber zulässige Schwankungen des Farbbildes nicht zu Störungen führen, so ist es sinnvoll, wenn die Umwandlung des ersten elektrischen Signals aus dem zweidimensionalen Ortsraum mittels einer zweidimensionalen Spektraltransformation durchgeführt wird. Beispiele für eine geeignete Spektraltransformation sind eine jeweils zweidimensionale Fourier-, Walsh-, Hadamard- oder Zirkulartransformation. Durch die zweidimensionale Spektraltransformation erhält man translationsinvariante Merkmalswerte. Vorzugsweise wird der Betrag der durch eine Spektraltransformation gewonnenen Spektralkoeffizienten als Merkmalswert verwendet.

Vorzugsweise sind die Zugehörigkeitsfunktionen unimodale Potentialfunktionen. Die übergeordnete Zugehörigkeitsfunktion ist vorzugsweise eine multimodale Potentialfunktion.

Es ist vorteilhaft, zumindest eine Zugehörigkeitsfunktion zu parametrisieren. Weist die Zugehörigkeitsfunktion positive und negative Steigungen auf, so ist es vorteilhaft, wenn die Parameter der positiven und negativen Steigung getrennt bestimmt werden können. Dadurch wird eine bessere Anpassung der Parameter an die zu untersuchenden Datensätze gewährleistet.

Nach einem besonders bevorzugten Ausführungsbeispiel wird das Verfahren wiederum in zwei unterschiedliche Betriebsarten unterteilt, nämlich in einen Lernmodus und einen Arbeitsmodus. Sind die Zugehörigkeitsfunktionen parametrisiert, so können im Lernmodus aus gemessenen Datensätzen die Parameter der Zugehörigkeitsfunktion ermittelt werden.

Im Lernmodus werden die Parameter der Zugehörigkeitsfunktionen an sogenannte Referenzbilder angeglichen, d. h. im Lernmodus wird eine Zugehörigkeit der Merkmalswerte, die sich aus den Referenzbildern ergeben, zu den entsprechenden Merkmalen mittels der Zugehörigkeitsfunktionen und deren Parametern hergeleitet. Im nachfolgenden Arbeitsmodus werden die Merkmalswerte, die sich aus den anschließend gemessenen Datensätzen ergeben, mit den Zugehörigkeitsfunktionen, deren Parameter im Lernmodus ermittelt wurden, gewichtet, wodurch eine Zugehörigkeit der Merkmalswerte der nun gemessenen Datensätze zu den entsprechenden Merkmalen hergestellt wird. Durch die Unterteilung des Verfahrens in einen Lernmodus und einen Arbeitsmodus werden also die Parameter der Zugehörigkeitsfunktionen anhand von gemessenen Referenzdatensätzen ermittelt. Im Arbeitsmodus werden die zu prüfenden Datensätze mit den im Lernmodus festgelegten Zugehörigkeitsfunktionen gewichtet und bewertet.

Des Weiteren ist vorzugsweise zumindest eine Regel, mittels der die Zugehörigkeitsfunktionen miteinander verknüpft werden, eine konjunktive Regel im Sinne einer WENN ... DANN-Verknüpfung.

Vorzugsweise ist die Generierung der übergeordneten unscharfen Zugehörigkeitsfunktion in folgende Teilschritte unterteilt: Prämissenauswertung, Aktivierung und Aggregation. Bei der Prämissenauswertung wird für jeden WENN-Teil einer Regel ein Zugehörigkeitswert bestimmt und bei der Aktivierung eine Zugehörigkeitsfunktion für jede WENN ... DANN-Regel festgelegt. Nachfolgend wird bei der Aggregation die übergeordnete Zugehörigkeitsfunktion durch Überlagerung aller bei der Aktivierung erzeugten Zugehörigkeitsfunktionen generiert.

Es ist vorteilhaft, die Sympathiewertermittlung insbesondere nach einer Schwerpunkts- und/oder Maximummethode durchzuführen.

Die Prüfung des Erkennungsmerkmals auf eine bestimmte geometrische Kontur und/oder auf eine relative Anordnung zu mindestens einem weiteren Erkennungsmerkmal des Materials beruht auf dem Grundgedanken, bei der Auswertung eines positionsvarianten Erkennungsmerkmals, bei dem die optischen Eigenschaften, beispielsweise das Reflektionsvermögen, zur ausreichend zuverlässigen Identifizierung nicht ausreicht, zusätzlich bekannte Informationen über dieses Erkennungsmerkmal in die Auswertung einfließen zu lassen. Als Prämisse wird dabei angenommen, dass sich das positionsvariante Erkennungsmerkmal, beispielsweise ein farbiger Fensterfaden, zumindest in Teilbereichen in den optischen Eigenschaften, beispielsweise im Grauwert, so weit vom sonstigen zu inspizierenden Material, z. B. dem das Erkennungsmerkmal umgebenden Druckbild unterscheidet, dass zumindest keine vollständige Übereinstimmung zwischen dem Erkennungsmerkmal und dem Druckbild besteht. Somit werden zur Positionsbestimmung des positionsvarianten Erkennungsmerkmals zusätzliche Informationen über die an sich bekannte geometrische Kontur des Erkennungsmerkmals oder die relative Anordnung mehrerer im Druckbild vorhandener Erkennungsmerkmale ausgewertet. Diese zusätzlichen Informationen werden dabei in einer zu jedem auszuwertenden Material im Datenspeicher als Maskensollwerte gespeicherten Maskenreferenz hinterlegt, die die geometrischen Daten in geeigneter Form repräsentiert.

Des Weiteren ist in dem Datenspeicher als Referenz ein Untergrundsollwert hinterlegt, der die optischen Eigenschaften des Druckbildes in zumindest einem Teil eines Umgebungsbereichs, der das Erkennungsmerkmal umgibt, repräsentiert. Der Untergrundsollwert muss sich in seinen optischen Eigenschaften zumindest geringfügig von den optischen Eigenschaften des zu identifizierenden Erkennungsmerkmals unterscheiden. Bei der Prüfung des Materials wird dann aus dem vom Bildsensor bereitgestellten aktuellen ersten elektrischen Signal und dem Untergrundsollwert ein ein Differenzbild darstellender Differenzwert zumindest für den Erwartungsbereich gebildet. Im Differenzbild werden im Wesentlichen alle Merkmale des Druckbildes durch Differenzbildung ausgeblendet, die in ihren optischen Eigenschaften dem Untergrundsollwert entsprechen. Nur positionsvariante Bereiche des Erkennungsmerkmals und auch anderer Elemente, wie Druckfehler oder Kantenabweichungen, werden aufgrund ihrer Abweichung gegenüber dem Hintergrundreferenzwert im Differenzbild abgebildet, wobei die Bereiche des positionsvarianten Erkennungsmerkmals besonders hohe Amplituden aufweisen.

Sobald die Differenzwerte vorliegen, werden die Differenzwerte mit den Maskensollwerten der Maskenreferenz verglichen und aus dem Ergebnis des Vergleichs auf die aktuelle Position des Erkennungsmerkmals zurückgeschlossen. Diesem Verfahrensschritt liegt die Überlegung zugrunde, dass das Differenzbild im Wesentlichen durch die Abbildung des positionsvarianten Erkennungsmerkmals bestimmt ist, sodass aus einer weitgehenden Überdeckung zwischen Maskenreferenz und Differenzbild auf die tatsächliche Position des positionsvarianten Erkennungsmerkmals zurückgeschlossen werden kann. Lässt sich aufgrund anderer Fehlereinflüsse keine ausreichende Überdeckung zwischen Maskensollwerten und Differenzwerten ermitteln, so ist dies unschädlich, da dies z. B. lediglich zu einer Fehleranzeige bei der Druckbildkontrolle und zur Ausschleusung des entsprechenden Druckbogens führt.

Vorzugsweise werden die Bereiche des Druckbildes, die sich aus der aktuellen Position des Erkennungsmerkmals ergeben, bei der nachfolgenden qualitativen Beurteilung des Materials ausgeblendet, sodass Störungen in der Prüfung des Druckbildes durch die positionsvariante Anordnung des Erkennungsmerkmals ausgeschlossen sind.

Die Erkennung des positionsvarianten Erkennungsmerkmals kann bei der Durchführung dieses Verfahrens noch dadurch verbessert werden, dass im Datenspeicher eine Binarisierungsschwelle hinterlegt ist. Nachdem aus dem aktuellen ersten elektrischen Signal und dem Untergrundsollwert das Differenzbild gebildet wurde, können aus dem Differenzbild alle Bilddaten ausgefiltert werden, deren Werte unterhalb der Binarisierungsschwelle liegen. D. h. im Differenzbild bleiben nur solche Bildpunkte erhalten, die sich ausreichend signifikant vom übrigen Druckbild unterscheiden, sodass die meist anderen Abweichungen, beispielsweise Druckfehler oder Kantenabweichungen, aus dem Differenzbild ausgeblendet werden können.

Bei der Positionsfindung des positionsvarianten Erkennungsmerkmals im aktuellen Druckbild kann derart vorgegangen werden, dass die Maskenreferenz so lange verschoben wird, bis sich eine maximale Überdeckung zwischen Maskenreferenz und Differenzbild ergibt. Dabei können verschiedene mathematische Bewertungsverfahren eingesetzt werden, um die Überdeckung zwischen Maskenreferenz und Differenzbild zu bewerten und um das entsprechende Überdeckungsmaximum zu finden. Selbstverständlich ist es möglich, die Überdeckung durch optische Betrachtung eines ausreichend geschulten Prüfpersonal beurteilen zu lassen, was jedoch aufgrund der hohen Personalkosten und der geringen Verarbeitungsgeschwindigkeit in den meisten Fällen nicht ausreichend wirtschaftlich ist. Deshalb soll die Berechnung der Überdeckung zwischen Differenzbild und Maskenreferenz unter Verwendung geeigneter mathematischer Operationen möglichst mit Methoden der elektronischen Datenverarbeitung erfolgen.

Eine Möglichkeit zur Bewertung der Überdeckung zwischen der Maskenreferenz und dem Differenzbild besteht darin, dass entsprechend der optischen Verteilung der Bildpunkte im Differenzbild Schwerpunkte berechnet werden und diese Schwerpunkte mit dem Schwerpunkt der Maskenreferenz verglichen werden. Eine maximale Überdeckung ergibt sich dann, wenn die Summe der Schwerpunktdifferenzen zwischen Maskenreferenz und Differenzbild minimiert ist.

Voraussetzung für die Durchführung dieses Verfahrens zur Prüfung des Erkennungsmerkmals auf eine bestimmte geometrische Kontur und/oder auf eine relative Anordnung zu mindestens einem weiteren Erkennungsmerkmal des Materials ist die Hinterlegung eines geeigneten Untergrundsollwertes im Datenspeicher. Grundsätzlich kann der Untergrundsollwert einfach als ein Verfahrensparameter vorgegeben werden, beispielsweise ausgehend von einem oder mehreren Erfahrungswerten. Es ist jedoch vorteilhaft, wenn der Untergrundsollwert abhängig vom jeweiligen Druckbild des zu prüfenden Materials spezifisch in einem Lernmodus festgelegt wird. Dazu werden nachfolgend zwei Alternativen angegeben.

Nach der ersten Alternative zur Festlegung des Untergrundsollwertes wird im Lernmodus Referenzmaterial verwendet, das das positionsvariante Erkennungsmerkmal nicht enthält. Beispielsweise können dazu mit Banknoten oder Wertmarken bedruckte Druckbogen verwendet werden, bei denen der Fensterfaden nicht vorhanden ist. Durch Auswertung dieses Referenzmaterials ohne Erkennungsmerkmal kann der Untergrundsollwert abgeleitet werden.

Steht ein Referenzmaterial ohne Erkennungsmerkmal nicht zur Verfügung, kann der Lernmodus auch mit Referenzmaterial, das das positionsvarianten Erkennungsmerkmal enthält, durchgeführt werden. Treten bei der Auswertung des Druckbildes des Referenzmaterials die positionsvarianten Erkennungsmerkmale im Vergleich zum Umgebungsbereich hell hervor, so wird als Untergrundsollwert ein Schwellwert gewählt, der den Werten der dunkelsten Bildpunkte des Erkennungsmerkmals entspricht. Bei der späteren Prüfung des Materials wird dann ausgehend von dem Schwellwert angenommen, dass zumindest im Erwartungsbereich alle Bildpunkte, die dunkler als der Untergrundsollwert sind, nicht zum positionsvarianten Erkennungsmerkmal gehören. Tritt das Erkennungsmerkmal dagegen im Vergleich zum Umgebungsbereich dunkel hervor, wird als Untergrundsollwert ein Schwellwert gewählt, dessen Wert den hellsten Bildpunkten des Erkennungsmerkmals entspricht.

Soweit aufgrund der optischen Eigenschaften des Druckbildes erforderlich, ist es selbstverständlich möglich, für unterschiedliche Bereiche des Materials unterschiedliche Untergrundsollwerte zu definieren, damit das positionsvariante Erkennungsmerkmal im Differenzbild ausreichend signifikant abgebildet wird.

Ausführungsbeispiele der Erfindung sind in den Zeichnungen dargestellt und werden im Folgenden näher beschrieben.

Es zeigen:
- Fig. 1: ein Blockdiagramm mit für das Verfahren relevanten Funktionseinheiten;
- Fig. 2: Verfahrensschritte bei der Durchführung des Verfahrens zur Prüfung des Farbbildes auf eine Farbabweichung von einem Referenzbild;
- Fig. 3: schematische Darstellung des Verfahrens zur Prüfung von Farbabweichungen im aufgenommenen Farbbild mit einem Gegenfarbenmodell;
- Fig. 4: einen Ablaufplan des Lern- und Arbeitsmodus sowie der Klassifikation;
- Fig. 5: ein Flussdiagramm des Verfahrens zur Prüfung des Erkennungsmerkmals auf seine Zugehörigkeit zu einer bestimmten Klasse von Erkennungsmerkmalen;
- Fig. 6: ein schematisch dargestelltes Differenzbild in Ansicht von oben;
- Fig. 7: das Differenzbild gemäß Fig. 6 nach Durchführung einer Binarisierung;
- Fig. 8: die Maskenreferenz zur Positionsbestimmung des positionsvarianten Erkennungsmerkmals im Differenzbild gemäß Fig. 7;
- Fig. 9: die Überdeckung zwischen Differenzbild gemäß Fig. 7 und Maskenreferenz gemäß Fig. 8;
- Fig. 10: eine zweite Maskenreferenz in schematisch dargestellter seitlicher Ansicht;
- Fig. 11: ein zweites Differenzbild in schematisch dargestellter seitlicher Ansicht.

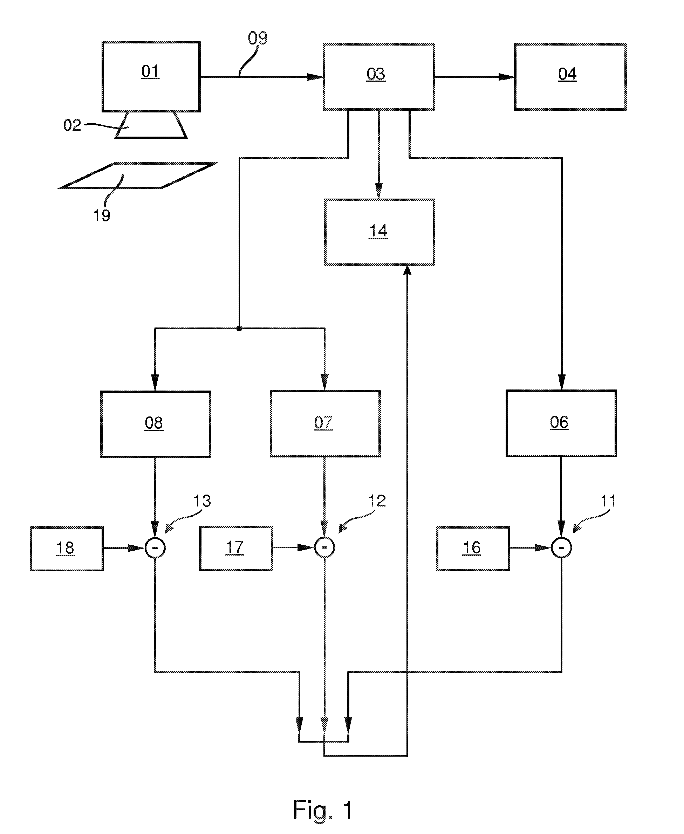

Fig. 1 zeigt ein Blockdiagramm mit den Funktionseinheiten, die für das Verfahren zur qualitativen Beurteilung eines bedruckten Materials 19 mit mindestens einem Erkennungsmerkmal relevant sind. Eine Farbkamera 01, die z. B. in oder an einer Druckmaschine ortsfest angebracht ist, sodass sie mit ihrem Bildsensor 02 Farbbilder des an der Farbkamera 01 vorbeibewegten, zu beurteilenden Materials 19 vorzugsweise im laufenden Druckprozess aufnehmen kann, ist an eine Auswertevorrichtung 03 angeschlossen. Die von der Farbkamera 01 aufgenommenen, in der Auswertevorrichtung 03 ausgewerteten Bilddaten können bedarfsweise auf einem Farbmonitor 04 dargestellt werden, wobei der Farbmonitor 04 in oder an einem zur Druckmaschine gehörenden Leitstand angeordnet sein kann. Die zur qualitativen Beurteilung des bedruckten Materials 19 herangezogenen Prüfverfahren sind in Verbindung mit der Auswertevorrichtung 03 in z. B. drei parallelen Signalpfaden dargestellt, wobei die Prüfvorgänge in den jeweiligen Signalpfaden vorzugsweise in derselben Auswertevorrichtung 03 unabhängig voneinander ablaufen. Die Prüfungen laufen vorzugsweise zumindest in etwa zeitgleich ab, d. h. die Prüfvorgänge starten zumindest zum selben Zeitpunkt. Die Prüfvorgänge können beginnen, nachdem die mindestens zwei Betriebsarten aufweisende Auswertevorrichtung 03 von ihrem Lernmodus 48 in ihren Arbeitsmodus 49 gewechselt ist. Je ein Signalpfad betrifft eine Funktionseinheit 06 zur Prüfung zumindest des Farbbildes vom Erkennungsmerkmal auf eine Farbabweichung vom Referenzbild, eine Funktionseinheit 07 zur Prüfung des Erkennungsmerkmals auf seine Zugehörigkeit zu einer bestimmten Klasse von Erkennungsmerkmalen und eine Funktionseinheit 08 zur Prüfung des Erkennungsmerkmals auf eine bestimmte geometrische Kontur oder auf eine relative Anordnung zu mindestens einem weiteren Erkennungsmerkmal des Materials 19, wobei jede Prüfung einen an einer im jeweiligen Signalpfad vorgesehenen Vergleichsstelle 11; 12; 13 durchgeführten Vergleich des vom Bildsensor 02 der Farbkamera 01 bereitgestellten und geeignet aufbereiteten ersten Signals 09 mit einem jeweils geeignet festgelegten Sollwert 16; 17; 18 einschließt, wobei die Sollwerte 16; 17; 18 in einem zur Auswertevorrichtung 03 gehörenden Datenspeicher 14 gespeichert sind. Die jeweiligen Prüfungsergebnisse in den einzelnen Signalpfaden werden wieder an die Auswertevorrichtung 03 zwecks dortiger Speicherung gemeldet. Die für das Verfahren zur qualitativen Beurteilung eines bedruckten Materials 19 mit mindestens einem Erkennungsmerkmal relevanten Funktionseinheiten können auch in einer das Material 19 verarbeitenden Maschine implementiert sein, wobei diese Maschine z. B. einer Druckmaschine, vorzugsweise einer Bogendruckmaschine, insbesondere einer Bogenrotationsdruckmaschine, vorzugsweise nachgeordnet, aber auch vorgeordnet sein kann. Das Material 19, d. h. ein z. B. mehrere Erkennungsmerkmale aufweisender Druckbogen 19, wird in der Bogendruckmaschine mit einer Geschwindigkeit von z. B. 18.000 Bogen pro Stunde bedruckt und/oder anschließend mit dieser Geschwindigkeit in der die Druckbögen 19 verarbeitenden Maschine weiter verarbeitet. Im Fall der Ausbildung des Materials 19 als eine Materialbahn 19 kann die Druckgeschwindigkeit oder die Weiterverarbeitungsgeschwindigkeit z. B. 15 m/s betragen. Obwohl die Prüfvorgänge zur Beurteilung der Qualität des durch die Druckmaschine oder die das Material 19 verarbeitenden Maschine rechenintensiv und die Bewegungsgeschwindigkeit des Materials 19 hoch sind, wird mit dem vorgeschlagenen Verfahren eine zuverlässige Beurteilung erzielt. Da die für das Verfahren zur qualitativen Beurteilung eines bedruckten Materials 19 mit mindestens einem Erkennungsmerkmal relevanten Funktionseinheiten in oder an der Druckmaschine oder der das Material 19 verarbeitenden Maschine angeordnet sind, sind der Ort der Bereitstellung des Referenzsignals und der Ort der Prüfung identisch. Das Farbbild und sein Referenzbild können mit denselben Funktionseinheiten, insbesondere mit derselben Farbkamera 01, am selben Ort aufgenommen und in derselben Auswertevorrichtung 03 ausgewertet werden.

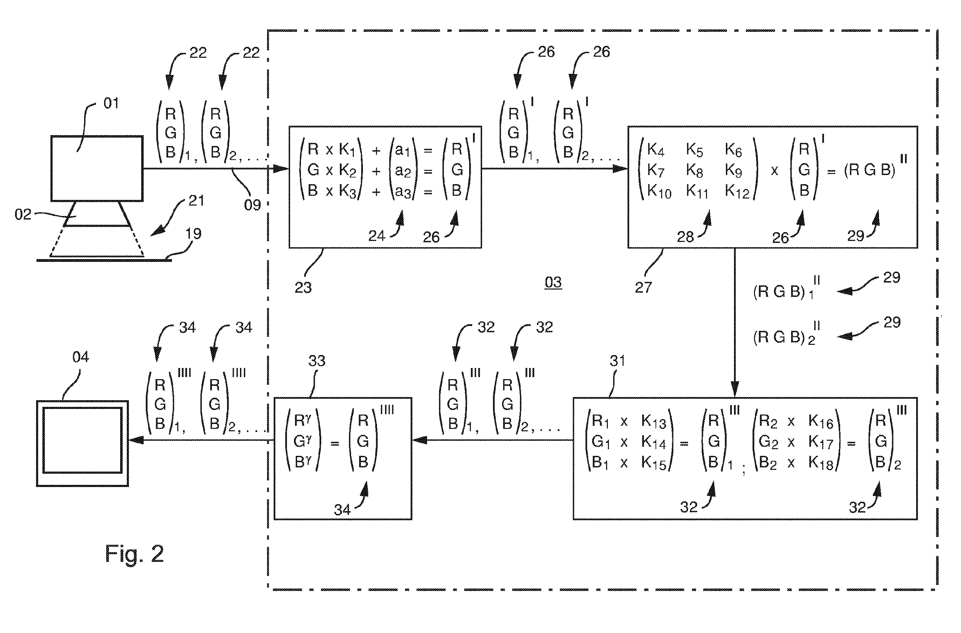

Zur qualitativen Beurteilung des bedruckten Materials 19 laufen folgende Verfahrensschritte ab, die nun beispielhaft anhand der Fig. 2 bis 11 beschrieben werden.

Mit der Farbkamera 01 wird ein Farbbild eines im Beobachtungsbereich 21 angeordneten, farbig bedruckten Materials 19 aufgenommen. Die Farbkamera 01 weist einen vorzugsweise als ein CCD-Chip 02 ausgebildeten Bildsensor 02 auf, der die im Beobachtungsbereich 21 erfassten Bildinformationen in elektronische Bilddaten umsetzt, die ein von der Farbkamera 01 bzw. dessen Bildsensor 02 bereitgestelltes erstes elektrisches Signal 09 bilden. Bei dieser Umsetzung wird von jedem lichtempfindlichen Pixel des CCD-Chips02 ein Signal-Vektor 22 generiert. Entsprechend der Anzahl der Pixel des CCD-Chips 02 werden von der Farbkamera 01 entsprechend viele, mit einem Zählindex kenntlich gemachte Signal-Vektoren 22 der Auswertevorrichtung 03 zur Weiterverarbeitung zur Verfügung gestellt.

Jeder Signal-Vektor 22 weist vorzugsweise drei Koeffizienten R, G und B auf. Die Koeffizienten R, G und B entsprechen den Farbwerten der drei Signalkanäle Rot, Grün und Blau, wobei das von einem Pixel abgegebene vektorielle erste elektrische Signal 09 mit der aufgenommenen Farbe des bedruckten Materials 19 an der entsprechenden Position im Beobachtungsbereich 21 korreliert.

Die Signal-Vektoren 22, deren Zählindex zur Beschreibung der Anordnung des jeweiligen Pixel auf dem CCD-Chip 02 dient, bilden Rohdaten für ein erstes Korrekturmodul 23 zur Anpassung der Farbbalance, der Helligkeit und des Kontrastes. Dazu wird jeder Koeffizient R; G; B des Signal-Vektors 22 mit einem signalkanalabhängigen Korrekturfaktor K₁, K_{2,} K₃ multipliziert. Überdies wird zu dem daraus resultierenden Ergebnisvektor ein Korrekturvektor 24 mit den Festwertkoeffizienten a₁, a₂ und a₃ addiert. Durch diese Rechenoperation werden erste korrigierte Signal-Vektoren 26 erzeugt, die die Farbbalance, die Helligkeit und den Kontrast der Bilddaten verbessern. Dieses Ziel wird dadurch erreicht, dass die signalkanalabhängigen Korrekturfaktoren K₁, K₂ und K₃ sowie die Koeffizienten a₁, a₂ und a₃ des Korrekturvektors 24 derart gewählt sind, dass bei Aufnahme der Referenzgrauwerte Schwarz und Weiß die dabei von der Farbkamera 01 erzeugten Signal-Vektoren 22 derart transformiert werden, dass die erhaltenen korrigierten Signal-Vektoren 26 solchen Sollwerten entsprechen, wie sie sich in Vektoren aus der Umrechnung der bekannten CIELAB-Farbwerte ergeben.

Anschließend werden die ersten korrigierten Signal-Vektoren 26 einem zweiten Korrekturmodul 27 zugeführt. Im zweiten Korrekturmodul 27 wird jeder erste korrigierte Signal-Vektor 26 mit einer quadratischen i × i - Korrekturmatrix 28 multipliziert, wobei i der Zahl der Koeffizienten des korrigierten Signal-Vektoren 26 entspricht und in diesem Fall i = 3 ist. Aus dieser Multiplikation ergeben sich die zweiten korrigierten Signal-Vektoren 29. Die Koeffizienten K₄ bis K₁₂ der Korrekturmatrix 28 wurden dabei zuvor in einem geeigneten Iterationsprozess derart ermittelt, dass die in den ersten korrigierten Signal-Vektoren 26 enthaltenen Bildinformationen an das Farbempfinden des menschlichen Auges angenähert werden.

Anschließend werden die zweiten korrigierten Signal-Vektoren 29 an ein drittes Korrekturmodul 31 weitergeleitet. Im dritten Korrekturmodul 31 sind in einem Datenspeicher 14 zu jedem Pixel signalkanalabhängige Korrekturfaktoren gespeichert, die zur Anpassung der von der Position der jeweiligen Pixel abhängigen Intensitätswerte mit den Koeffizienten R, G und B multipliziert werden. Im Ergebnis werden also die zweiten korrigierten Signal-Vektoren 29 des ersten Pixel mit den Korrekturfaktoren K₁₃, K₁₄ und K₁₅ multipliziert, um daraus für den ersten Pixel einen dritten korrigierten Signal-Vektor 32 zu errechnen. Diese Korrektur der zweiten korrigierten Signal-Vektoren 29 wird vorzugsweise für alle Pixel des Bildsensors 02 durchgeführt.

Die dritten korrigierten Signal-Vektoren 32 werden dann an ein viertes Korrekturmodul 33 weitergeleitet. Im vierten Korrekturmodul 33 werden die Koeffizienten R; G; B der dritten korrigierten Signal-Vektoren 32 mit einem Faktor γ potenziert und daraus die vierten korrigierten Signal-Vektoren 34 errechnet. Durch die Potenzierung mit dem Faktor γ wird die nichtlineare Helligkeitsübertragungsfunktion eines Farbmonitors 04 berücksichtigt, an den die vierten korrigierten Signal-Vektoren 34 zur Anzeige übertragen werden.

Im Ergebnis wird durch die Korrektur der Signal-Vektoren 22 in den Korrekturmodulen 23, 27, 31 und 33 erreicht, dass die am Farbmonitor 04 angezeigten Farbbilder dem Farbempfinden des menschlichen Auges so angepasst sind, dass der Seheindruck bei Betrachtung der Anzeige am Farbmonitor 04 gut dem Farbempfinden entspricht, das bei unmittelbarer Betrachtung des bedruckten Materials 19 entstehen würde.

Wie erwähnt, erfolgt die Aufnahme des Bildsignals durch einen Bildsensor 02 in voneinander getrennten Signalkanälen R; G; B. Im vorliegenden Ausführungsbeispiel handelt es sich bei den Signalkanälen R; G; B um die drei Signalkanäle Rot R, Grün G und Blau B. Jeder der Signalkanäle R; G; B weist eine einstellbare spektrale Empfindlichkeit auf. Dies hat den Vorteil, dass jeder Signalkanal R; G; B in seiner spektralen Empfindlichkeit an die spektrale Empfindlichkeit des jeweiligen Zapfens der Retina des menschlichen Auges angepasst werden kann.

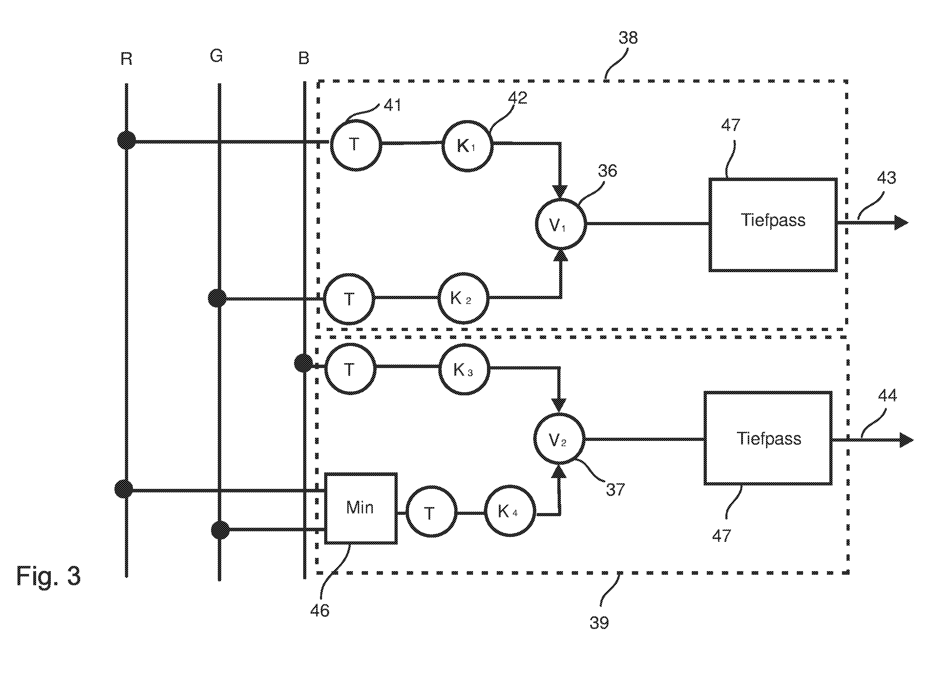

Beim Verfahren zur Prüfung des Farbbildes auf eine Farbabweichung von einem Referenzbild wird der Spektralgehalt eines Bildes pixelweise analysiert. Zur Modellierung der beiden rezeptiven Felder Rot/Grün und Blau/Gelb des menschlichen Auges werden gemäß der Fig. 3 in diesem Verfahren die Bildsensorsignale der Signalkanäle R; G; B miteinander verknüpft. Vor der eigentlichen Verknüpfung mit den Berechnungsvorschriften 36; 37 wird jedes Bildsensorsignal im Gegenfarbkanal 38; 39 einer nicht linearen Transformation 41 unterzogen. Dadurch wird dem digitalen Charakter der elektronisch erzeugten Aufnahmen Rechnung getragen. Anschließend wird jedes Signal mit einem Koeffizienten Kᵢ (i = 1 ... 4) 42 gewichtet. Dadurch wird erreicht, dass eine reine Intensitätsänderung des Ausgangsbildes keinen Beitrag zu einem der Ausgangssignale 43; 44 der Gegenfarbkanäle 38; 39 liefert. Die Generierung der Ausgangssignale 43; 44 der Gegenfarbkanäle 38; 39 erfolgt analog der Generierung der Signale der rezeptiven Felder bei der menschlichen Retina. Das heißt, es wird eine Verknüpfung mittels der Berechnungsvorschriften 36; 37 der Signalkanäle R; G; B entsprechend der Verknüpfung der Zapfen der menschlichen Retina durchgeführt. Zur Schaffung des Ausgangssignals 43 des Rot/Grünen-Gegenfarbkanals 38 werden die Bildsensorsignale des roten Signalkanals R und des grünen Signalkanals G miteinander mittels der ersten Berechnungsvorschrift 36 verknüpft. Zur Generierung des Ausgangssignals 44 des Blau/Gelben-Gegenfarbkanals 39 wird im vorliegenden Ausführungsbeispiel das Bildsensorsignal des blauen Signalkanals B mit dem Minimum 46 der Bildsensorsignale des roten Signalkanals R und des grünen Signalkanals G mittels der Berechnungsvorschrift 37 verknüpft. Die rezeptiven Felder der menschlichen Retina sind durch ein Tiefpassverhalten charakterisiert. Dementsprechend werden im vorliegenden Ausführungsbeispiel die durch Verknüpfung erhaltenen Signale einer Tiefpassfilterung 47, z. B. mit einem Gauss-Tiefpassfilter, unterzogen.

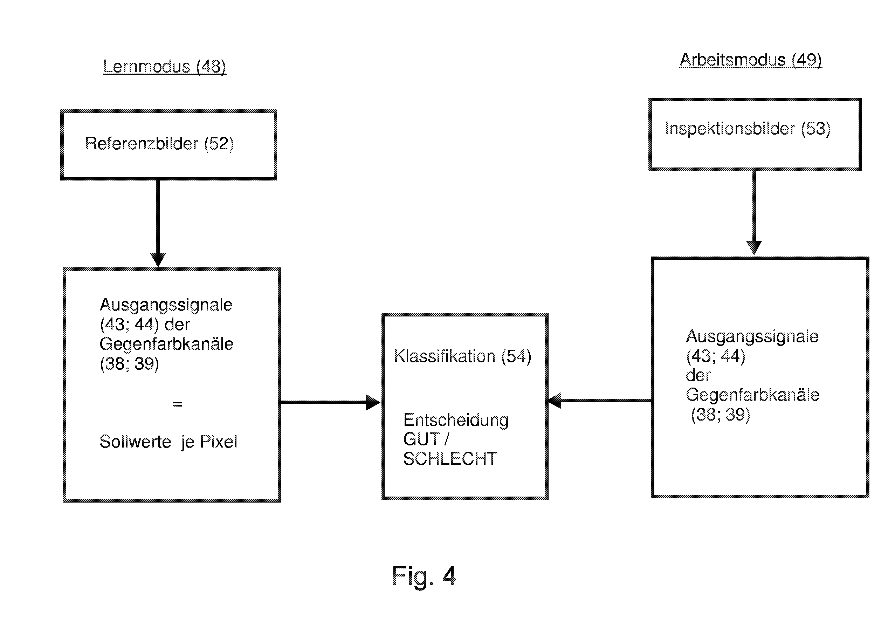

Die Fig. 4 zeigt die eigentliche Prüfung des bedruckten Materials 19, welche zweistufig erfolgt, nämlich in einem Lernmodus 48 und einem nachgeschalteten Arbeitsmodus 49. Der Lernmodus 48 hat das Ziel der pixelweisen Generation von Sollwerten als Referenzdatenwerten, die im nachfolgenden Arbeitsmodus 49 mit den Ausgangssignalen 43; 44 der Gegenfarbkanäle 38; 39 der entsprechenden Pixel verglichen werden. Beim Lernmodus 48 werden die Bildinhalte von einem Referenzbild 52 oder von mehreren Referenzbildern 52 dadurch analysiert, dass die Bildinhalte jedes Pixels in drei Signalkanälen R; G; B aufgenommen werden und eine anschließende wahrnehmungsgemäße Anpassung der Bildsignale jedes Signalkanals R; G; B vorgenommen wird und nachfolgend eine Weiterverarbeitung der Bildsensorsignale nach der zuvor beschriebenen Gegenfarbmethode durchgeführt wird. Die für jedes Pixel erhaltenen Ausgangssignale 43; 44 der Gegenfarbkanäle 38; 39 werden dann in einem Datenspeicher 14 gespeichert. Um zulässige Schwankungen der Referenzbilder 52 mit zu berücksichtigen, ist es sinnvoll, wenn mehrere Referenzbilder 52 im Lernmodus 48 Berücksichtigung finden. Dadurch ist es möglich, dass die gespeicherten Sollwerte jedes Pixels eine gewisse zulässige Schwankungstoleranz aufweisen. Die Schwankungstoleranz kann entweder durch die Minimal-/ Maximalwerte oder die Standardabweichung aus den erhaltenen Daten der Bildinhalte der Referenzbilder 52 jedes Pixels festgelegt werden.

Im Arbeitsmodus 49 findet dann ein pixelweiser Vergleich der Ausgangswerte 43; 44 der Gegenfarbkanäle 38; 39 eines Inspektionsbildes 53 mit den Sollwerten aus dem Datenspeicher 14 statt. Der Vergleich kann mittels eines linearen oder nichtlinearen Klassifikators 54, insbesondere mittels Schwellwertklassifikatoren, Euklidische ― Abstands - Klassifikatoren, Bayes ― Klassifikatoren, Fuzzy-Klassifikatoren oder künstliche neuronale Netze durchgeführt werden. Anschließend findet eine gut/ schlecht - Entscheidung statt.

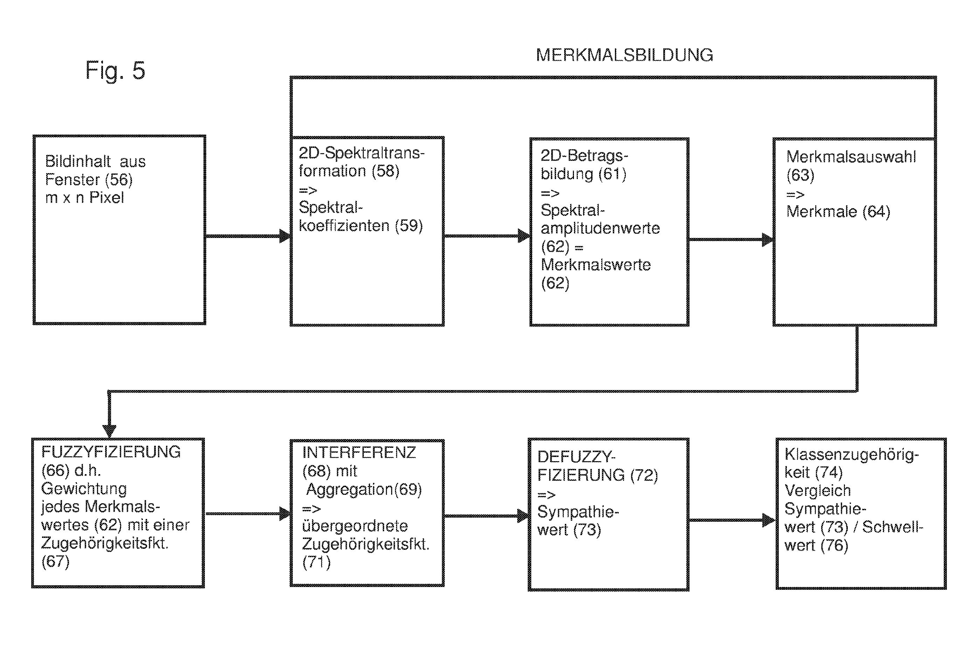

Fig. 5 zeigt ein Flussdiagramm zur Signalauswertung beim Verfahren zur Prüfung des Erkennungsmerkmals auf seine Zugehörigkeit zu einer bestimmten Klasse von Erkennungsmerkmalen.

Zunächst wird über das gesamte zu prüfende Farbbild ein Raster aus M x N Fenstern 56 gelegt, wobei M, N >1 ist. Jedes Fenster 56 besteht vorteilhafterweise aus m x n Pixel mit m; n > 1. Vorzugsweise wird ein quadratisches Raster aus N x N Fenstern 56 gewählt, wobei jedes Fenster 56 aus n x n Pixel besteht. Im Prüfvorgang wird das Signal jedes Fensters 56 getrennt geprüft.

Durch eine oder mehrere Spektraltransformationen 58 wird das zweidimensionale Farbbild des Ortsraums in ein zweidimensionales Bild im Frequenzraum transformiert. Das erhaltene Spektrum nennt man Frequenzspektrum. Da es sich im vorliegenden Ausführungsbeispiel um ein diskretes Spektrum handelt, ist auch das Frequenzspektrum diskret. Das Frequenzspektrum wird durch die Spektralkoeffizienten 59 - auch Spektralwerte 59 genannt - gebildet.

Im nächsten Verfahrensschritt findet die Betragsbildung 61 der Spektralwerte 59 statt. Der Betrag der Spektralwerte 59 wird Spektralamplitudenwert 62 genannt. Die Spektralamplitudenwerte 62 bilden im vorliegenden Ausführungsbeispiel die Merkmalswerte 62, d. h. sie sind identisch den Merkmalswerten 62.

Als weiterer Verfahrensschritt folgt die Merkmalsauswahl 63. Ziel der Merkmalsauswahl 63 ist es, diejenigen Merkmale 64 auszuwählen, die charakteristisch für den Bildinhalt des zu prüfenden Farbbildes sind. Als Merkmale 64 sind sowohl charakteristische Spektralamplitudenwerte 62, welche durch ihre Position im Frequenzraum und durch ihre Amplitude das Merkmal 64 definieren, als auch linguistische Variablen wie beispielsweise "grau", "schwarz" oder "weiß" möglich.

Im nun folgenden Verfahrensschritt, der Fuzzyfizierung 66, wird die Zugehörigkeit jedes Spektralamplitudenwerts 62 zu einem Merkmal 64 durch eine weiche oder unscharfe Zugehörigkeitsfunktion 67 festgelegt; d. h. es findet eine Gewichtung statt.

Sollen die Zugehörigkeitsfunktionen 67 in einem Lernmodus an als Referenzdatensätze gespeicherte Sollwerte angepasst werden können, ist es sinnvoll, wenn die Zugehörigkeitsfunktionen 67 als parametrisierte monomodale, d. h. eindimensionale Potentialfunktionen, ausgebildet sind, bei denen die Parameter der positiven und negativen Steigung getrennt an die zu untersuchenden Sollwerte angepasst werden können. In dem dem Lernmodus nachfolgenden Arbeitsmodus werden dann die Datensätze des Bildinhalts, aus welchen sich die Merkmalswerte 62 der zu prüfenden Farbbilder ergeben, mit den jeweiligen Zugehörigkeitsfunktionen 67 gewichtet, deren Parameter in dem vorangegangenen Lernmodus ermittelt wurden. D. h. es findet für jedes Merkmal 64 eine Art SOLL-IST-Vergleich zwischen einem Referenzdatensatz, der in den Parametern der Zugehörigkeitsfunktionen 67 zum Ausdruck kommt, und dem Datensatz des zu prüfenden Farbbildes statt. Durch die Zugehörigkeitsfunktionen 67 wird eine weiche oder unscharfe Zuordnung zwischen dem jeweiligen Merkmalswert 62 und dem Merkmal 64 hergestellt.

Im nächsten Verfahrensschritt, der Interferenz 68, findet im Wesentlichen eine konjunktive Verknüpfung 69 - auch Aggregation 69 genannt - aller Zugehörigkeitsfunktionen 67 der Merkmale 64 statt, wodurch eine übergeordnete Zugehörigkeitsfunktion 71 erzeugt wird.

Der nächste Verfahrensschritt, die Defuzzyfizierung 72, ermittelt aus der übergeordneten Zugehörigkeitsfunktion 71 einen konkreten Zugehörigkeitswert 73 oder Sympathiewert 73. Dieser Sympathiewert 73 wird bei der Klassifikation 74 mit einem vorher eingestellten Schwellwert 76 verglichen, wodurch eine Klassifikationsaussage getroffen werden kann. Der Schwellwert 76 wird entweder manuell oder automatisch eingestellt. Die Einstellung des Schwellwerts 76 erfolgt ebenfalls im Lernmodus.

Das Verfahren zur Prüfung des Erkennungsmerkmals auf eine bestimmte geometrische Kontur und/oder auf eine relative Anordnung zu mindestens einem weiteren Erkennungsmerkmal des Materials vollzieht sich im Wesentlichen in folgenden Schritten.

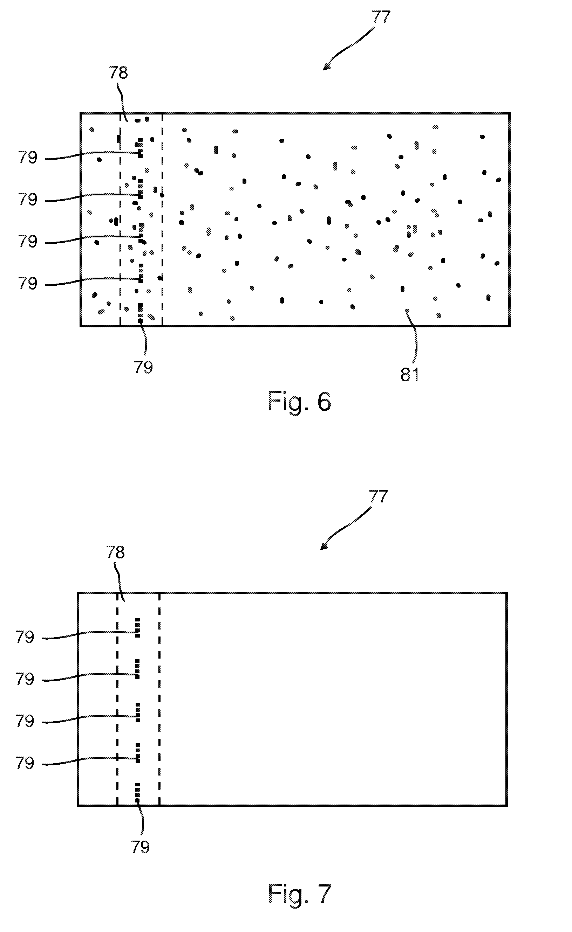

Gemäß Fig. 6 wurde bei der Prüfung z. B. von mit Banknoten 19 bedruckten Druckbogen ein Differenzbild 77 gebildet, wobei in Fig. 6 lediglich ein Ausschnitt aus dem Differenzbild 77 im Bereich einer Banknote 19 dargestellt ist. Man erkennt in Fig. 6, dass im Differenzbild 77 das normale Druckbild der Banknote 19 ausgeblendet ist und lediglich die Bereiche des Druckbildes, die sich signifikant vom Untergrundreferenzwert unterscheiden, als Dunkelfelder im Differenzbild abgebildet werden. In einem strichliniert angedeuteten, streifenförmigen Erwartungsbereich 78 kann die Position z. B. eines im Druckbogen eingebrachten Erkennungsmerkmals 79, insbesondere eines eingearbeiteten Fensterfadens 79, der sich im Differenzbild 77 entsprechend seinen Durchbrüchen in fünf Dunkelfeldern 79 abbildet, variieren.

Neben den fünf Dunkelfeldern 79, die sich aus der Abbildung des Fensterfadens 79 ergeben, bilden sich im Differenzbild 77 noch weitere Druckbildmerkmale als irrelevante Dunkelfelder 81 ab, die z. B. durch Druckfehler 81 generiert sind.

Fig. 7 stellt das Differenzbild 77 nach einer geeigneten Binarisierung dar, durch die die irrelevanten Dunkelfelder 81 ausgefiltert wurden. Im Differenzbild 77 treten im Ergebnis nur noch die vom Fensterfaden 79 herrührenden Dunkelfelder 79 signifikant hervor.

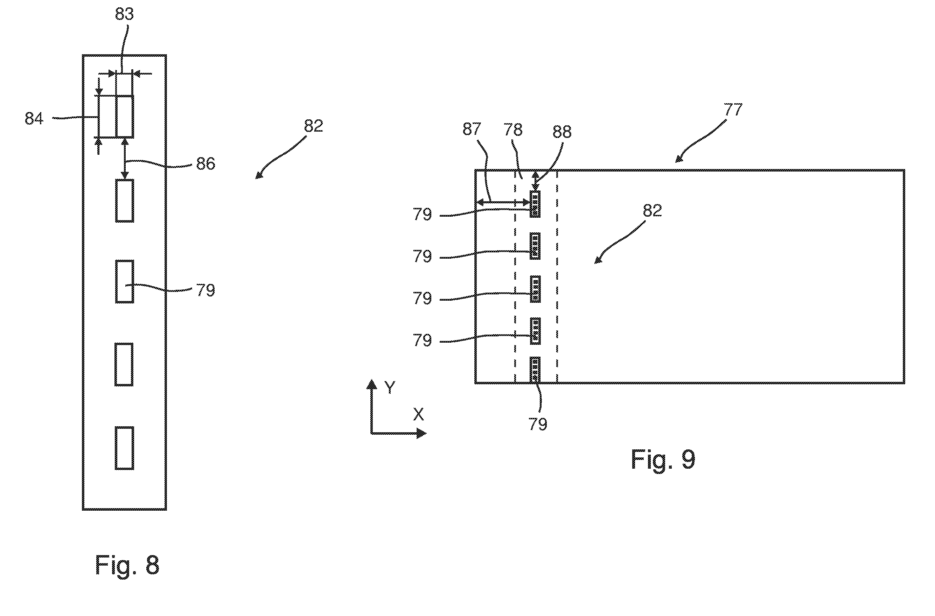

Fig. 8 stellt eine Maskenreferenz 82 in ihrer geometrischen Form dar. In der Maskenreferenz 82 sind die Daten für die Breite 83 und die Länge 84 der Fensterfadendurchbrüche 79 hinterlegt. Weiter sind in der Maskenreferenz 82 die Werte für den Abstand 86 zwischen den Fensterfadendurchbrüchen 79 und die Anzahl von Fensterfadendurchbrüchen 79 je Banknote 19 hinterlegt.

Wie in Fig. 9 schematisch angedeutet, wird die Maskenreferenz 82 bei der Auswertung durch datentechnische Operationen so lange relativ zum Differenzbild 77 verschoben, bis sich eine maximale Überdeckung zwischen der Maskenreferenz 82 und den Dunkelfeldern 79 im Differenzbild 77 ergibt. Ist dieses Maximum an Überdeckung erreicht, kann aus den Abständen 87; 88, die sich z. B. aus den aktuellen Positionen in X- und Y-Richtung der Maskenreferenz 82 relativ zu den Kanten der Banknote 19 ergeben, auf die aktuelle Position des Fensterfadens 79 im Druckbild geschlossen werden, sodass bei einer nachfolgenden Prüfung des Druckbildes die Bereiche der Fensterfadendurchbrüche 79 ausgeblendet werden können.

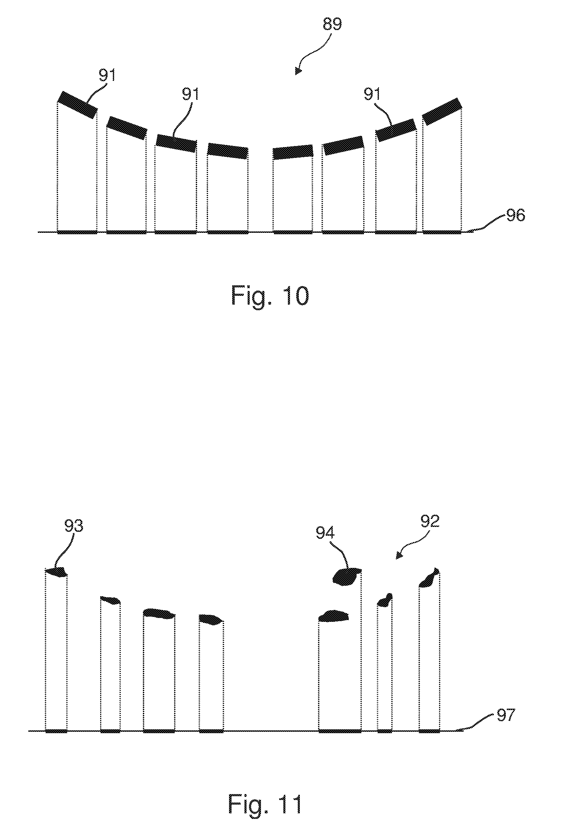

Fig. 10 zeigt eine zweite Maskenreferenz 89, die acht Fensterfadendurchbrüchen 91 entsprechende Dunkelfelder 91 bei der Prüfung einer Banknote 19 an einer konkav gekrümmten Anlagefläche repräsentiert.

Fig. 11 stellt ein Differenzbild 92 schematisch dar, bei dem sich die Fensterfadendurchbrüche 91 in Dunkelfeldern 93, z. B. in Fensterfäden 93, abgebildet haben. Das Dunkelfeld 94 wurde dabei von einem Druckfehler 94 und nicht von einem Fensterfadendurchbruch 91 verursacht. Außerdem hat sich ein Fensterfadendurchbruch 91 in der Mitte aufgrund der nicht ausreichenden Farbdifferenz zwischen Untergrund und Fensterfaden 93 nicht im Differenzbild 92 abgebildet.

Um den Vergleich zwischen der Maskenreferenz 89 und dem Differenzbild 92 zur Positionsfindung zu vereinfachen, wird die Maskenreferenz 89 auf eine Projektionslinie 96 projiziert und die daraus entstehende Hell-Dunkel-Verteilung mit der aus der Projektion des Differenzbildes 92 auf eine Projektionslinie 97 entstehenden Hell-Dunkel-Verteilung verglichen. Durch diesen eindimensionalen Vergleich der Hell-Dunkel-Verteilung kann die Position des Fensterfadens 93 in einer Richtung festgestellt werden.

### Bezugszeichenliste

- 01: Farbkamera
- 02: Bildsensor, CCD-Chip
- 03: Auswertevorrichtung
- 04: Farbmonitor
- 05: -
- 06: Funktionseinheit
- 07: Funktionseinheit
- 08: Funktionseinheit
- 09: Signal, elektrisches, erstes
- 10: -
- 11: Vergleichsstelle
- 12: Vergleichsstelle
- 13: Vergleichsstelle
- 14: Datenspeicher
- 15: ―
- 16: Sollwert
- 17: Sollwert
- 18: Sollwert
- 19: Material, Banknote, Wertmarke, Druckbogen, Materialbahn
- 20: ―
- 21: Beobachtungsbereich
- 22: Signal-Vektor
- 23: Korrekturmodul, erstes
- 24: Korrekturvektor
- 25: -
- 26: Signal-Vektor, erster korrigierter
- 27: Korrekturmodul, zweites
- 28: Korrekturmatrix
- 29: Signal-Vektoren, zweiter korrigierter
- 30: ―
- 31: Korrekturmodul, drittes
- 32: Signal-Vektor, dritter korrigierter
- 33: Korrekturmodul, viertes
- 34: Signal-Vektor, vierter korrigierter
- 35: ―
- 36: Berechnungsvorschrift
- 37: Berechnungsvorschrift
- 38: Gegenfarbkanal
- 39: Gegenfarbkanal
- 40: -
- 41: Transformation
- 42: Koeffizient Kᵢ (i = 1 ... 4)
- 43: Ausgangssignal (38)
- 44: Ausgangssignal (39)
- 45: -
- 46: Minimum
- 47: Tiefpassfilterung
- 48: Lernmodus
- 49: Arbeitsmodus
- 50: -
- 51: -
- 52: Referenzbild
- 53: Inspektionsbild
- 54: Klassifikator
- 55: -
- 56: Fenster, Bildfenster
- 57: -
- 58: Spektraltransformation
- 59: Spektralkoeffizient, Spektralwert
- 60: -
- 61: Betragsbildung
- 62: Spektralamplitudenwert, Merkmalswert
- 63: Merkmalsauswahl
- 64: Merkmal
- 65: -
- 66: Fuzzyfizierung
- 67: Zugehörigkeitsfunktion
- 68: Interferenz
- 69: konjunktive Verknüpfung, Aggregation, konjunktive Berechnungsvorschrift
- 70: -
- 71: übergeordnete Zugehörigkeitsfunktion
- 72: Defuzzyfizierung
- 73: Zugehörigkeitswert, Sympathiewert
- 74: Klassifikation
- 75: -
- 76: Schwellwert
- 77: Differenzbild
- 78: Erwartungsbereich
- 79: Dunkelfeld, Fensterfaden, Erkennungsmerkmal, Fensterfadendurchbruch
- 80: -
- 81: Dunkelfeld, Druckfehler
- 82: Maskenreferenz
- 83: Breite
- 84: Länge
- 85: -
- 86: Abstand
- 87: Abstand
- 88: Abstand
- 89: Maskenreferenz, zweite
- 90: -
- 91: Fensterfadendurchbruch, Dunkelfeld
- 92: Differenzbild
- 93: Dunkelfeld, Fensterfaden
- 94: Dunkelfeld, Druckfehler
- 95: -
- 96: Projektionslinie
- 97: Projektionslinie

- R, G, B: Koeffizient, Signalkanal
- K₁, K₂, K₃: Korrekturfaktor
- K ₄ bis K₁₂: Koeffizient
- K₁₃, K₁₄, K₁₅: Korrekturfaktor
- a₁, a₂, a₃: Festwertkoeffizient
- γ: Potenzierungsfaktor

## Patentansprüche

1. Verfahren zur qualitativen Beurteilung eines Materials (19) mit mindestens einem Erkennungsmerkmal (79), wobei mit einem elektronischen Bildsensor (02) zumindest vom Erkennungsmerkmal (79) ein Farbbild aufgenommen wird, wobei vom Bildsensor (02) mittelbar oder unmittelbar mindestens ein mit dem Farbbild korrelierendes erstes elektrisches Signal (09) bereitgestellt wird, wobei eine mit dem Bildsensor (02) verbundene Auswertevorrichtung (03) das erste elektrische Signal (09) auswertet, wobei aus zumindest einem Referenzbild ein zweites elektrisches Signal gewonnen und in einem Datenspeicher (14) gespeichert wird, wobei das zweite elektrische Signal zumindest für zwei unterschiedliche Eigenschaften des Referenzbildes jeweils einen Sollwert (16; 17; 18) für das erste elektrische Signal (09) aufweist, wobei das erste Signal (09) mit zumindest zwei der im zweiten elektrischen Signal enthaltenen Sollwerte (16; 17; 18) verglichen wird, wobei in dem Vergleich das Farbbild des Erkennungsmerkmals (79) auf eine Farbabweichung von dem Referenzbild und/oder das Erkennungsmerkmal (79) auf eine Zugehörigkeit zu einer bestimmten Klasse von Erkennungsmerkmalen (79) und/oder auf eine bestimmte geometrische Kontur und/oder auf eine relative Anordnung zu mindestens einem weiteren Erkennungsmerkmal (79) des Materials (19) geprüft wird, **dadurch gekennzeichnet, dass** die Prüfungen in einem laufenden Druckprozess einer Druckmaschine oder in einem laufenden Arbeitsprozess einer das Material (19) verarbeitenden Maschine erfolgen, wobei zumindest zwei der Prüfungen unabhängig voneinander in parallel verlaufenden Prüfvorgängen erfolgen.

2. Verfahren nach Anspruch 1, **dadurch gekennzeichnet, dass** unabhängig voneinander durchgeführte Prüfungen in etwa zeitgleich erfolgen.

3. Verfahren nach Anspruch 1, **dadurch gekennzeichnet, dass** unabhängig voneinander durchgeführte Prüfungen in derselben Auswertevorrichtung (03) erfolgen.

4. Verfahren nach Anspruch 1, **dadurch gekennzeichnet, dass** die in den einzelnen Signalpfaden erzielten Prüfungsergebnisse in der Auswertevorrichtung (03) gespeichert werden.

5. Verfahren nach Anspruch 1, **dadurch gekennzeichnet, dass** die Beurteilung des Materials (19) zu dessen Qualitätskontrolle erfolgt.

6. Verfahren nach Anspruch 1, **dadurch gekennzeichnet, dass** das Material (19) eine Banknote (19) oder eine Wertmarke (19) ist.

7. Verfahren nach Anspruch 1, **dadurch gekennzeichnet, dass** als ein Druckbogen (19) ausgebildetes Material (19) mit einer Geschwindigkeit von bis zu 18.000 Druckbogen (19) pro Stunde an dem Bildsensor (02) vorbeibewegt wird.

8. Verfahren nach Anspruch 1, **dadurch gekennzeichnet, dass** als eine Materialbahn (19) ausgebildetes Material (19) mit einer Geschwindigkeit von bis zu 15 m/s an dem Bildsensor (02) vorbeibewegt wird.

9. Verfahren nach Anspruch 1, **dadurch gekennzeichnet, dass** der Bildsensor (02) mehrere lichtempfindliche Pixel aufweist.

10. Verfahren nach Anspruch 9, **dadurch gekennzeichnet, dass** für jeden Pixel ein erstes elektrisches Signal (09) bereitgestellt wird.

11. Verfahren nach Anspruch 1, **dadurch gekennzeichnet, dass** das erste elektrische Signal (09) auf mehrere Signalkanäle (R; G; B) aufgeteilt wird.

12. Verfahren nach Anspruch 11, **dadurch gekennzeichnet, dass** das erste elektrische Signal (09) ein RGB-Signal ist, sodass jeder Signalkanal (R; G; B) einen eine der drei Grundfarben Rot, Grün und Blau entsprechenden Teil des ersten Signals (09) bereitstellt.

13. Verfahren nach Anspruch 11, **dadurch gekennzeichnet, dass** in jedem Signalkanal (R; G; B) dessen spektrale Empfindlichkeit auf eine bestimmte spektrale Empfindlichkeit des menschlichen Auges eingestellt wird.

14. Verfahren nach Anspruch 1, **dadurch gekennzeichnet, dass** das erste Signal (09) hinsichtlich Farbton, Sättigung und Helligkeit an das Farbempfinden des menschlichen Auges angepasst wird.

15. Verfahren nach Anspruch 11, **dadurch gekennzeichnet, dass** die Prüfung des Farbbildes auf eine Farbabweichung von dem Referenzbild **dadurch** erfolgt, dass der im ersten Signalkanal (R) bereitgestellte Teil des zu dem Farbbild gehörenden ersten Signals (09) mit dem im zweiten Signalkanal (G) bereitgestellten Teil mittels einer ersten Berechnungsvorschrift (36) verknüpft wird, wodurch ein Ausgangssignal (43) eines ersten Gegenfarbkanals (38) generiert wird, dass der im dritten Signalkanal (B) bereitgestellte Teil des zu dem Farbbild gehörenden ersten Signals (09) mit dem Teil in dem ersten und dem zweiten Signalkanal (R; G) mittels einer zweiten Berechnungsvorschrift (37) verknüpft wird, wodurch ein Ausgangssignal (44) eines zweiten Gegenfarbkanals (39) generiert wird, und dass die Ausgangssignale (43; 44) der Gegenfarbkanäle (38; 39) durch einen Vergleich mit Sollwerten klassifiziert werden.

16. Verfahren nach Anspruch 15, **dadurch gekennzeichnet, dass** die erste Berechnungsvorschrift (36) eine gewichtete Differenzbildung des im zweiten Signalkanal (G) bereitgestellten Teils des ersten elektrischen Signals (09) vom entsprechenden Teil im ersten Signalkanal (R) vorsieht, und / oder die zweite Berechnungsvorschrift (37) eine gewichtete Differenzbildung der gewichteten Summe der Teile im ersten und zweiten Signalkanal (R; G) vom entsprechenden Teil im dritten Signalkanal (B) vorsieht.

17. Verfahren nach Anspruch 15, **dadurch gekennzeichnet, dass** zumindest einer der in den Signalkanälen (R; G; B) bereitgestellten Teile des ersten elektrischen Signals (09) vor und / oder nach ihrer Verknüpfung mittels einer Berechnungsvorschrift (36; 37) einer Transformation (41) unterzogen wird.

18. Verfahren nach Anspruch 15, **dadurch gekennzeichnet, dass** das Ausgangssignal (43; 44) zumindest eines Gegenfarbkanals (38; 39) mittels eines Tiefpassfilters (47) gefiltert wird.

19. Verfahren nach Anspruch 15, **dadurch gekennzeichnet, dass** die durch zumindest ein Referenzbild erzeugten Ausgangssignale (43; 44) der beiden Gegenfarbkanäle (38; 39) als Sollwerte in dem Datenspeicher (14) gespeichert werden und wobei die durch das zu prüfende Erkennungsmerkmal (79) erzeugten Ausgangssignale (43; 44) der beiden Gegenfarbkanäle (38; 39) mit den im Datenspeicher (14) gespeicherten Sollwerten verglichen werden.

20. Verfahren nach Anspruch 15, **dadurch gekennzeichnet, dass** der Vergleich der durch das zu prüfende Erkennungsmerkmal (79) erzeugten Ausgangssignale (43; 44) der beiden Gegenfarbkanäle (38; 39) mit den im Datenspeicher (14) gespeicherten Sollwerten für jeden Pixel des Bildsensors (02) erfolgt.

21. Verfahren nach Anspruch 20, **dadurch gekennzeichnet, dass** die im Datenspeicher (14) für jeden Pixel gespeicherten Sollwerte durch Speicherung der Ausgangssignale (43; 44) von mehreren Referenzbildern erzeugt werden, wodurch für die Sollwerte ein Toleranzfenster festgelegt wird.

22. Verfahren nach Anspruch 15, **dadurch gekennzeichnet, dass** die Klassifikation (54) der Ausgangssignale (43; 44) der Gegenfarbkanäle (38; 39) mittels eines Klassifikatorsystems durchgeführt wird.

23. Verfahren nach Anspruch 1, **dadurch gekennzeichnet, dass** die Prüfung des Erkennungsmerkmals (79) auf seine Zugehörigkeit zu einer bestimmten Klasse von Erkennungsmerkmalen (79) **dadurch** erfolgt, dass das vom Bildsensor (02) bereitgestellte erste elektrische Signal (09) mittels zumindest einer Rechenvorschrift in ein translationsinvariantes Signal mit zumindest einem Merkmalswert (62) umgewandelt wird, dass der Merkmalswert (62) mit zumindest einer unscharfen Zugehörigkeitsfunktion (67) **dadurch** gewichtet wird, dass durch die Zugehörigkeitsfunktion (67) die Zugehörigkeit jedes Merkmalswerts (62) zu einem für den Bildinhalt des zu prüfenden Farbbildes charakteristischen Merkmal (64) festgelegt wird, dass eine übergeordnete unscharfe Zugehörigkeitsfunktion (71) durch Verknüpfung aller Zugehörigkeitsfunktionen (67) mittels einer aus zumindest einer Regel bestehenden Berechnungsvorschrift generiert wird, dass ein Sympathiewert (73) aus der übergeordneten unscharfen Zugehörigkeitsfunktion (71) ermittelt wird, dass der Sympathiewert (73) mit einem Schwellwert (76) verglichen wird und dass in Abhängigkeit vom Ergebnis dieses Vergleichs über eine Zugehörigkeit des Erkennungsmerkmals (79) zu einer bestimmten Klasse von Erkennungsmerkmalen (79) entschieden wird.

24. Verfahren nach Anspruch 23, **dadurch gekennzeichnet, dass** ein Raster aus mehreren Bildfenstern (56) über das Farbbild gelegt wird, wobei jedes Bildfenster (56) aus mehreren Pixel besteht.

25. Verfahren nach Anspruch 23, **dadurch gekennzeichnet, dass** die Rechenvorschrift zur Umwandlung des ersten elektrischen Signals (09) des Bildsensors (02) in einen translationsinvarianten Merkmalswert (62) ein zweidimensionales mathematisches Spektraltransformationsverfahren (58) ist.

26. Verfahren nach Anspruch 25, **dadurch gekennzeichnet, dass** der Merkmalswert (62) durch den Betrag eines Spektralkoeffizienten (59) repräsentiert wird.

27. Verfahren nach Anspruch 24, **dadurch gekennzeichnet, dass** für jedes Bildfenster (56) aus dem vom Bildsensor (02) zu jedem Pixel bereitgestellten ersten elektrischen Signal (09) zweidimensionale Spektren bestimmt werden.

28. Verfahren nach Anspruch 27, **dadurch gekennzeichnet, dass** aus den zweidimensionalen Spektren Spektralamplitudenwerte (62) berechnet und zu einem einzigen Sympathiewert (73) pro Bildfenster (56) miteinander verknüpft werden.

29. Verfahren nach Anspruch 23, **dadurch gekennzeichnet, dass** in einem Lernmodus (48) der Auswertevorrichtung (03) zumindest ein Parameter angeglichen oder zumindest ein Schwellwert (76) bestimmt wird, und wobei in einem Arbeitsmodus (49) der Auswertevorrichtung (03) das vom Bildsensor (02) bereitgestellte erste elektrische Signal (09) anhand der Ergebnisse aus dem Lernmodus (48) beurteilt wird.

30. Verfahren nach Anspruch 23, **dadurch gekennzeichnet, dass** die Berechnungsvorschrift, mittels der die Zugehörigkeitsfunktionen (67) miteinander verknüpft werden, eine konjunktive Berechnungsvorschrift (69) im Sinne einer WENN ... DANN - Verknüpfung ist.

31. Verfahren nach Anspruch 23, **dadurch gekennzeichnet, dass** die Generierung der übergeordneten unscharfen Zugehörigkeitsfunktion (71) durch die Abarbeitung der Teilschritte Prämissenauswertung, Aktivierung und Aggregation erfolgt, wobei bei der Prämissenauswertung für jeden WENN - Teil einer Berechnungsvorschrift ein Sympathiewert (73) bestimmt wird, und wobei bei der Aktivierung eine Zugehörigkeitsfunktion (67) für jede WENN ... DANN - Berechnungsvorschrift bestimmt wird und wobei bei der Aggregation die übergeordnete Zugehörigkeitsfunktion (71) durch Überlagerung aller bei der Aktivierung erzeugten Zugehörigkeitsfunktionen (67) generiert wird.

32. Verfahren nach Anspruch 23, **dadurch gekennzeichnet, dass** der Sympathiewert (73) nach einer Schwerpunkts- und / oder Maximummethode ermittelt wird.

33. Verfahren nach Anspruch 1, **dadurch gekennzeichnet, dass** die Prüfung des Erkennungsmerkmals (79) auf eine bestimmte geometrische Kontur oder auf eine relative Anordnung zu mindestens einem weiteren Erkennungsmerkmal (79) des Materials (19) **dadurch** erfolgt, dass zumindest ein Untergrundsollwert und zumindest ein Maskensollwert in dem Datenspeicher (14) hinterlegt werden, wobei der Untergrundsollwert zumindest eine Eigenschaft des zu beurteilenden Materials (19) in zumindest einem Teil eines das Erkennungsmerkmal (79) umgebenden Erwartungsbereichs (78) repräsentiert und wobei der Maskensollwert die geometrische Kontur des Erkennungsmerkmals (79) oder die relative Anordnung mehrerer Erkennungsmerkmale (79) untereinander repräsentiert, dass bei der Prüfung des Materials (19) aus dem vom Bildsensor (02) bereitgestellten ersten elektrischen Signal (09) und dem Untergrundsollwert ein Differenzwert zumindest für den Erwartungsbereich (78) gebildet wird, dass aus einem Vergleich des Differenzwertes mit dem Maskensollwert die aktuelle Position des Erkennungsmerkmals (79) abgeleitet wird und dass zur qualitativen Beurteilung des Materials (19) der Bereich des zu beurteilenden Materials (19), der sich aus der aktuellen Position des Erkennungsmerkmals (79) ergibt, ausgeblendet wird.

34. Verfahren nach Anspruch 33, **dadurch gekennzeichnet, dass** der Untergrundsollwert den Grauwert des das Erkennungsmerkmal (79) umgebenden Erwartungsbereichs (78) repräsentiert.

35. Verfahren nach Anspruch 33, **dadurch gekennzeichnet, dass** im Datenspeicher (14) eine Binarisierungsschwelle hinterlegt ist, wobei aus dem Differenzwert alle vom Bildsensor (02) bereitgestellten ersten elektrischen Signale (09) ausgefiltert werden, deren Wert unterhalb der Binarisierungsschwelle liegt.

36. Verfahren nach Anspruch 33, **dadurch gekennzeichnet, dass** bei der Positionsfindung des Erkennungsmerkmals (79) der Maskensollwert solange angepasst wird, bis sich eine maximale Übereinstimmung zwischen Maskensollwert und Differenzwert ergibt.

37. Verfahren nach Anspruch 33, **dadurch gekennzeichnet, dass** bei der Positionsfindung des Erkennungsmerkmals (79) ein Vergleich der Schwerpunkte der Maskensollwerte mit den Schwerpunkten des Differenzwertes erfolgt.

38. Verfahren nach Anspruch 37, **dadurch gekennzeichnet, dass** als aktuelle Position des Erkennungsmerkmals (79) die Positionswerte angenommen werden, bei denen sich beim Vergleich der Schwerpunkte der Maskensollwerte mit den Schwerpunkten des Differenzwertes insgesamt eine minimale Abweichung ergibt.

39. Verfahren nach Anspruch 33, **dadurch gekennzeichnet, dass** das Erkennungsmerkmal (79) streifenförmig ausgebildet ist oder streifenförmige Abschnitte aufweist.

40. Verfahren nach Anspruch 33, **dadurch gekennzeichnet, dass** das Erkennungsmerkmal (79) als ein Sicherheitsmerkmal einer Banknote (19) oder einer Wertmarke (19) ausgebildet ist.

41. Verfahren nach Anspruch 33, **dadurch gekennzeichnet, dass** das Erkennungsmerkmal (79) als ein Fensterfaden (79), ein Fensterfadendurchbruch (79; 91), ein Hologramm oder ein Kinegramm ausgebildet ist.

42. Verfahren nach Anspruch 33, **dadurch gekennzeichnet, dass** zur Festlegung des Untergrundsollwerts Material (19) ohne ein Erkennungsmerkmal (79) verwendet wird, wobei der Untergrundsollwert aus mindestens einer Eigenschaft des zu beurteilenden Materials (79) im Erwartungsbereich (78) abgeleitet wird.

43. Verfahren nach Anspruch 33, **dadurch gekennzeichnet, dass** zur Festlegung des Untergrundsollwerts Material (19) mit einem Erkennungsmerkmal (79) verwendet wird, wobei bei einem im Vergleich zum Erwartungsbereich (78) hell hervortretenden Erkennungsmerkmal (79) der Untergrundsollwert als Schwellwert aus den Werten der dunkelsten Bildpunkte des Erkennungsmerkmals (79) abgeleitet wird, und wobei bei einem im Vergleich zum Erwartungsbereich (78) dunkel hervortretenden Erkennungsmerkmal (79) der Untergrundsollwert als Schwellwert aus den Werten der hellsten Bildpunkte des Erkennungsmerkmals (79) abgeleitet wird.

44. Verfahren nach Anspruch 33, **dadurch gekennzeichnet, dass** für unterschiedliche Bereiche des Materials (19) unterschiedliche Untergrundsollwerte definiert werden.

45. Verfahren nach Anspruch 33, **dadurch gekennzeichnet, dass** der Maskensollwert und der Differenzwert jeweils auf zumindest eine Projektionslinie (96; 97) projiziert werden, wobei die aktuelle Position des Erkennungsmerkmals (79) in Längsrichtung der Projektionslinien (96; 97) aus einem Vergleich der Projektionsdaten des Maskensollwertes und des Differenzwertes abgeleitet wird.

46. Verfahren nach Anspruch 11, **dadurch gekennzeichnet, dass** das erste elektrische Signal (09) ein Signal-Vektor ist (22), dessen Koeffizienten (R; G; B) die Teile des vom Bildsensor (02) bereitgestellten ersten elektrischen Signals (09) in verschiedenen Signalkanälen (R; G; B) repräsentieren, dass die Koeffizienten (R; G; B) mit einer Korrekturmatrix (28) multipliziert werden, dass der **dadurch** erhaltene korrigierte Signal-Vektor (29) einem Farbmonitor (04) zugeführt wird und das Farbbild anhand des korrigierten Signal-Vektors (29) zu dessen qualitativer Beurteilung am Farbmonitor (04) dargestellt wird.

47. Verfahren nach Anspruch 46, **dadurch gekennzeichnet, dass** die Korrekturmatrix (28) in ihren Spalten und Zeilen jeweils so viele Koeffizienten (i) wie der Signal-Vektor (22) aufweist.

48. Verfahren nach Anspruch 46, **dadurch gekennzeichnet, dass** die Koeffizienten (K₄ bis K₁₂) der Korrekturmatrix (28) in einem iterativen Näherungsalgorithmus ermittelt werden, bei dem eine Referenzfarbtafel vorgegeben wird, auf der in mehreren Farbfeldern unterschiedliche Referenzfarben dargestellt sind, wobei für jedes Farbfeld der Referenzfarbtafel ein Vektor mit Sollwerten vorgegeben wird, wobei mit dem Bildsensor (02) von der Referenzfarbtafel ein Farbbild aufgenommen wird, wobei für jedes Farbfeld ein Signal-Vektor (22) ermittelt wird, wobei in einem ersten Iterationsschritt die Signal-Vektoren (22) für alle Farbfelder mit der Korrekturmatrix (28) multipliziert werden und wobei die Koeffizienten (K₄ bis K₁₂) der Korrekturmatrix (28) in jedem folgenden Iterationsschritt derart verändert werden, dass die korrigierten Signal-Vektoren (29) iterativ an die Vektoren mit den vorgegebenen Sollwerten angenähert werden.

49. Verfahren nach Anspruch 48, **dadurch gekennzeichnet, dass** die Annäherung der korrigierten Signal-Vektoren (29) an die Vektoren mit den vorgegebenen Sollwerten für jeden Iterationsschritt **dadurch** bewertet wird, dass für jedes Farbfeld der Referenzfarbtafel der Differenzwert zwischen korrigiertem Signal-Vektor (29) und dem Vektor mit den vorgegebenen Sollwerten ermittelt und die Summe aller Differenzwerte aufaddiert wird, wobei die Änderung der Koeffizienten (K₄ bis K₁₂) der Korrekturmatrix (28) im aktuellen Iterationsschritt nur dann für den nachfolgenden Iterationsschritt angenommen wird, wenn die Summe aller Differenzwerte im aktuellen Iterationsschritt im Vergleich zur Summe aller Differenzwerte im vorangegangenen Iterationsschritt kleiner geworden ist.

50. Verfahren nach Anspruch 46, **dadurch gekennzeichnet, dass** die Signal-Vektoren (22) zusätzlich zur Korrektur mit der Korrekturmatrix (28) in einem weiteren Korrekturschritt zur Anpassung der Farbbalance, der Helligkeit und des Kontrastes derart verändert werden, dass die Koeffizienten (R; G; B) jedes Signal-Vektors (22) mit signalkanalabhängigen Korrekturfaktoren (K₁; K₂; K₃) multipliziert werden und zu jedem Signal-Vektor (22) ein Korrekturvektor (24) addiert wird.

51. Verfahren nach Anspruch 50, **dadurch gekennzeichnet, dass** die Koeffizienten (a₁; a₂; a₃) des Korrekturvektors (24) und die signalkanalabhängigen Korrekturfaktoren (K₁; K₂; K₃) **dadurch** ermittelt werden, dass eine Referenzfarbtafel vorgegeben wird, auf der in mehreren Farbfeldern unterschiedliche Referenzfarben dargestellt sind, wobei für jedes Farbfeld der Referenzfarbtafel ein Vektor mit Sollwerten vorgegeben wird, wobei mit dem Bildsensor (02) von der Referenzfarbtafel ein Farbbild aufgenommen wird, wobei für jedes Farbfeld ein Signal-Vektor (22) ermittelt wird, wobei der Korrekturvektor (24) und die Korrekturfaktoren (K₁; K₂; K₃) derart gewählt werden, dass die korrigierten Signal-Vektoren (26) für die beiden Farbfelder mit den Referenzgrauwerten Schwarz und Weiß, die durch entsprechende Addition mit dem Korrekturvektor (24) und durch eine Multiplikation mit den signalkanalabhängigen Korrekturfaktoren (K₁; K₂; K₃) erhaltenen werden, mit den Vektoren mit den vorgegebenen Sollwerten für diese beiden Farbfelder übereinstimmen.

52. Verfahren nach Anspruch 50 oder 51, **dadurch gekennzeichnet, dass** der Korrekturschritt zur Anpassung der Farbbalance, der Helligkeit und des Kontrastes vor der Multiplikation mit der Korrekturmatrix (28) durchgeführt wird.

53. Verfahren nach Anspruch 46, **dadurch gekennzeichnet, dass** der Bildsensor (02) eine Vielzahl von flächig oder zeilenförmig angeordneten Pixel aufweist, wobei jedes Pixel mindestens einen Signal-Vektor (22) liefert.

54. Verfahren nach Anspruch 53, **dadurch gekennzeichnet, dass** der Signal-Vektor (22) zusätzlich zur Korrektur mit der Korrekturmatrix (28) in einem weiteren Korrekturschritt zur Anpassung der Intensitätswerte derart verändert werden, dass die für jeden Pixel ermittelten Koeffizienten (R; G; B) der korrigierten Signal-Vektoren (26; 29) oder unkorrigierten Signal-Vektoren (22) jeweils mit für jeden Pixel spezifisch vorgegebenen, signalkanalabhängigen Korrekturfaktoren (K₁₃, K₁₄, K_{15;} K₁₆, K₁₇, K₁₈) multipliziert werden.

55. Verfahren nach Anspruch 54, **dadurch gekennzeichnet, dass** die pixelspezifischen, signalkanalabhängigen Korrekturfaktoren (K₁₃, K₁₄, K_{15;} K₁₆, K₁₇, K₁₈) **dadurch** ermittelt werden, dass der Beobachtungsbereich (21) des Bildsensors (02) mit einem homogenen farbigen Material, insbesondere homogen weißen Material ausgelegt wird, dass mit dem Bildsensor (02) ein Farbbild aufgenommen wird und dass **dadurch** für jeden Pixel ein Signal-Vektor (22) ermittelt wird, dass derjenige Signal-Vektor (22) bestimmt wird, der die hellste Stelle im Beobachtungsbereich (21) repräsentiert, und dass für jeden Pixel die pixelspezifischen, signalkanalabhängigen Korrekturfaktoren (K₁₃, K_{14,} K_{15;} K₁₆, K_{17,} K₁₈) derart gewählt werden, dass das Ergebnis der Multiplikation dieser Korrekturfaktoren (K₁₃, K_{14,} K_{15;} K₁₆, K_{17,} K₁₈) mit den Koeffizienten (R; G; B) der jeweils entsprechenden Signal-Vektoren (22) mit den Koeffizienten (R; G; B) des Signal-Vektors (22) an der hellsten Stelle im Beobachtungsbereich übereinstimmt.

56. Verfahren nach Anspruch 55, **dadurch gekennzeichnet, dass** die Beleuchtung im Beobachtungsbereich (21) bei der Bestimmung der pixelspezifischen signalkanalabhängigen Korrekturfaktoren (K₁₃, K₁₄, K_{15;} K₁₆, K₁₇, K₁₈) der Beleuchtung des Bildsensors (02) bei der qualitativen Beurteilung des Materials (19) entspricht.

57. Verfahren nach Anspruch 47, **dadurch gekennzeichnet, dass** die als Basis genommenen Koeffizienten (R; G; B) der korrigierten Signal-Vektoren (32) vor ihrer Übertragung an den Farbmonitor (04) jeweils mit einem Faktor (γ) potenziert werden.
